# EUROPEAN PATENT APPLICATION

(11) **EP 4 357 911 A1**
(43) Date of publication of application: **24.04.2024**
(21) Application number: 21945993.0
(22) Date of filing: 16.06.2021
(51) Int. Cl.: G06F 8/70

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: NISHIGAKI, Masaki, Kawasaki-shi, Kanagawa 211-8588 (JP)
(74) Representative: Hoffmann Eitle
(86) International application number: PCT/JP2021/022881
(87) International publication number: WO 2022/264316

(57) **Abstract**

Use of an incompatibility information database is promoted. A storage unit (11) stores incompatibility information (13) indicating a rewrite method of making source code dependent on first software compatible with second software and registrant information (14) indicating a registrant of the incompatibility information (13). A processing unit (12) acquires use information (16) indicating a user of the incompatibility information (13) and a use result of the incompatibility information (13). The processing unit (12) identifies the type of a use result indicated by the use information (16). The processing unit (12) calculates an evaluation value to be given to at least one of the user indicated by the use information (16) and the registrant indicated by the registrant information (14) according to the identified type based on evaluation reference information (15) indicating a correspondence relationship between a plurality of types of use results and a plurality of evaluation values.

## Description

### FIELD

The embodiments discussed herein are related to an information processing program, an information processing method, and an information processing device.

### BACKGROUND

An information processing system may use software provided by a software vendor. As an example of software, middleware such as a database management system (DBMS) is given. The source code of a program executed in the information processing system may be created depending on the specifications of provided software. For example, a program may transmit a request to provided software and call a function of the software, such as transmitting a structured query language (SQL) statement to a DBMS and calling a database operation function.

The information processing system may change software to be used. For example, when a software vendor performs version upgrade, the information processing system may update the software to be used to a new version. Furthermore, for example, the information processing system may switch to the same type of software provided by another software vendor.

However, by changing software, a failure based on the incompatibility between pieces of software may occur in an existing program. For example, due to a difference in language specifications for describing a request, such as supported language specifications of an SQL statement, an error may occur in transmission of a request from an existing program to new software. Furthermore, for example, the function or performance for the same request may differ between the current software and new software. Therefore, there is a possibility that a change of software involves correction of source code.

Note that an importance evaluation system has been proposed in which the importance of reusing a software component is evaluated based on the use results of the software component. Furthermore, an information processing device has been proposed in which a solution to a problem is accepted from a plurality of users and points are given to the users as rewards for the solution. Furthermore, a content sharing system has been proposed in which a post of an image or video content is accepted from a user, an advertisement is associated with the posted content, and a reward is given to the user according to the number of times the content has been browsed.

### SUMMARY

### TECHNICAL PROBLEM

As one method of supporting correction of source code, a method is conceivable in which a computer stores incompatibility information that defines a rewrite method of source code at the time of software change, and presents or executes the rewrite method indicated by the stored incompatibility information.

With a database storing incompatibility information being shared by a plurality of users, knowledge of incompatibility is shared and there is a possibility that correction work of source code is streamlined. However, a shared database is not necessarily actively used by a plurality of users simply by preparing the shared database. For this reason, there is a possibility that accumulation of useful incompatibility information and practical use of incompatibility information are not sufficiently promoted. Accordingly, in one aspect, an object of the present disclosure is to promote use of an incompatibility information database.

### SOLUTION TO PROBLEM

According to one aspect, an information processing program that causes a computer to execute the following processing is provided. Use information is acquired, that is use information for a database including incompatibility information indicating a rewrite method of making source code dependent on first software compatible with second software and registrant information indicating a registrant of the incompatibility information, and indicates a user of the incompatibility information and a use result of the incompatibility information. The type of the use result indicated by the use information is identified. An evaluation value to be given to at least one of the user indicated by the use information and the registrant indicated by the registrant information is calculated according to the identified type based on evaluation reference information indicating a correspondence relationship between a plurality of types of use results and a plurality of evaluation values. Furthermore, according to one aspect, an information processing method that is executed by a computer is provided. Furthermore, according to one aspect, an information processing device including a storage unit and a processing unit is provided.

### ADVANTAGEOUS EFFECTS OF INVENTION

In one aspect, use of an incompatibility information database may be promoted.

The above-described and other objects, features, and advantages of the present disclosure will be apparent from the following description associated with the accompanying drawings that illustrate preferred embodiments as examples of the present disclosure.

The object and advantages of the invention will be realized and attained by means of the elements and combinations particularly pointed out in the claims.

It is to be understood that both the foregoing general description and the following detailed description are exemplary and explanatory and are not restrictive of the invention.

### BRIEF DESCRIPTION OF DRAWINGS

FIG. 1 is a diagram for describing an information processing device of a first embodiment.
FIG. 2 is a diagram illustrating an example of an information processing system of a second embodiment;
FIG. 3 is a block diagram illustrating a hardware example of the information processing device;
FIG. 4 is a diagram illustrating an example of a flow of incompatibility absorption of database products;
FIG. 5 is a block diagram illustrating a function example of the information processing device;
FIG. 6 is a diagram illustrating an example of an edge table and a syntax incompatibility master table;
FIG. 7 is a diagram illustrating an example of source code before conversion and a syntax tree;
FIG. 8 is a diagram illustrating an example of attribute information;
FIG. 9 is a diagram illustrating an example of a syntax table;
FIG. 10 is a diagram illustrating an example of an instruction table;
FIG. 11 is a diagram illustrating an example of syntax incompatibility information;
FIG. 12 is a diagram illustrating an example of source code after conversion and a syntax tree;
FIG. 13 is a diagram illustrating another example of source code before conversion and a syntax tree;
FIG. 14 is a diagram illustrating another example of syntax incompatibility information;
FIG. 15 is a diagram illustrating the other example of syntax incompatibility information (continued);
FIG. 16 is a diagram illustrating an example of performance incompatibility information;
FIG. 17 is a diagram illustrating an example of SQL syntax information;
FIG. 18 is a diagram illustrating an example of a value master table;
FIG. 19 is a diagram illustrating an example of tables used for incompatibility information management;
FIG. 20 is a diagram illustrating an example of a point totaling table;
FIG. 21 is a flowchart illustrating a procedure example of incompatibility information management; and
FIG. 22 is a flowchart illustrating the procedure example of incompatibility information management (continued).

### DESCRIPTION OF EMBODIMENTS

Hereinafter, the present embodiments will be described with reference to the drawings.

### [First Embodiment]

A first embodiment will be described.

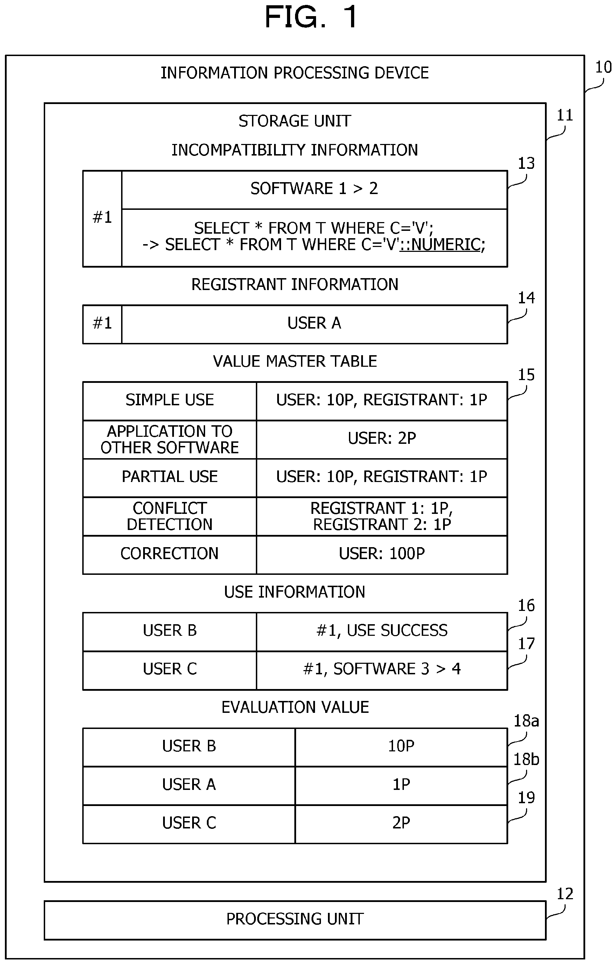

FIG. 1 is a diagram for describing an information processing device of the first embodiment.

An information processing device 10 of the first embodiment supports incompatibility absorption in which source code dependent on certain software is rewritten so as to be compatible with another piece of software. The information processing device 10 manages incompatibility information indicating a method of incompatibility absorption. The information processing device 10 may be a client device or a server device. The information processing device 10 may be referred to as a computer, an incompatibility information management device, or a software development support device.

The information processing device 10 includes a storage unit 11 and a processing unit 12. The storage unit 11 may be a volatile semiconductor memory such as a random-access memory (RAM) or a nonvolatile storage such as a hard disk drive (HDD) or a flash memory. For example, the processing unit 12 is a processor such as a central processing unit (CPU), a graphics processing unit (GPU), a digital signal processor (DSP), or the like. However, the processing unit 12 may include an application-specific electronic circuit such as an application-specific integrated circuit (ASIC) or a field-programmable gate array (FPGA). For example, the processor executes a program stored in a memory such as a RAM (may be the storage unit 11). A set of processors may also be referred to as a multiprocessor or simply a "processor".

The storage unit 11 stores a database including incompatibility information 13 and registrant information 14. Furthermore, the storage unit 11 stores a value master table 15.

The incompatibility information 13 indicates a rewrite method of rewriting the source code of a program dependent on first software so as to be compatible with second software. The incompatibility information 13 is knowledge information in which knowledge of incompatibility absorption is expressed in a certain format. The first software corresponds to software before change, and the second software corresponds to software after change. The pieces of software before and after change may be a software product provided from a software vendor, or may be middleware such as a DBMS or a Web server. Furthermore, the pieces of software before and after change may be the same type of software provided from different software vendors, or may be different versions of software provided from the same software vendor.

The source code may define a request message indicating a request to software. A request message may be an SQL statement, and the source code may be described in SQL or SQL procedure language. The languages for describing requests to the pieces of software before and after change are similar but may not be the same. For example, while the pieces of software before and after change both support general-purpose query languages such as SQL, a query language may be independently extended.

The incompatibility information 13 may indicate a syntactic feature that causes a failure and a syntax after rewrite. The incompatibility information 13 may include an identification instruction indicating a procedure for detecting an incompatible portion from the source code and a rewrite instruction indicating a procedure for rewriting the incompatible portion. For example, the incompatibility information 13 resolves syntax incompatibility, function incompatibility, or performance incompatibility.

Syntax incompatibility is incompatibility in which a syntax that has been allowed in the software before change is not allowed in the software after change. When a program having syntax incompatibility transmits a request message to the software after change, a transmission error may occur and execution of the software after change may fail. Function incompatibility is incompatibility in which an execution result of the software after change does not agree with an execution result of the software before change. When a program having function incompatibility transmits a request message to the software after change, an expected execution result may not be obtained. Performance incompatibility is incompatibility in which the execution performance of the software after change is lower than that of the software before change. When a program having performance incompatibility transmits a request message to the software after change, the waiting time may be significantly increased.

The registrant information 14 indicates a registrant who has registered the incompatibility information 13 in the database. A registrant is usually a creator who has created the incompatibility information 13. For example, the registrant information 14 is the name of a registrant or a user ID for identifying a registrant. The registrant information 14 may further indicate an approver who has verified the validity of the incompatibility information 13 when the incompatibility information 13 is registered.

The value master table 15 indicates a correspondence relationship between the types of use results of the incompatibility information 13 and evaluation values. The value master table 15 may be referred to as evaluation reference information. An evaluation value is a point given to a related person who has played a role in improving the value of the incompatibility information 13. Roles for which an evaluation value is given may differ depending on the type of a use result, and evaluation values to be given may differ depending on the type of a use result. Furthermore, evaluation values may be given to a plurality of roles from one use result, and evaluation values may be different between the plurality of roles.

The types of use results may include success of incompatibility absorption from the first software to the second software, which is initially assumed. From this use result, an evaluation value may be given to the current user and the registrant of the incompatibility information 13. Furthermore, the types of use results may include application of the incompatibility information 13 to incompatibility absorption between pieces of software that is different from the initially-assumed incompatibility absorption from the first software to the second software. From this use result, an evaluation value may be given to a user who has found the application to other pieces of software.

Furthermore, the types of use results may include partial use of part of information in the incompatibility information 13. For example, the incompatibility information 13 may include a plurality of pieces of incompatibility sub-information indicating a rewrite method of rewriting a plurality of discontinuous character strings in the source code. In such case, a user may be able to reuse some pieces of incompatibility sub-information of the plurality of pieces of incompatibility sub-information. From this use result, an evaluation value may be given to the current user and the registrant of the incompatibility information 13.

Furthermore, the types of use results may include detection of a conflict between the incompatibility information 13 and another piece of incompatibility information. For example, another piece of incompatibility information registered in the database may define a syntactic feature that causes a failure of the second software. The other piece of incompatibility information may be performance incompatibility information. In this case, the source code rewritten in accordance with the rewrite method indicated by the incompatibility information 13 may correspond to the syntactic feature indicated by the other piece of incompatibility information. From this use result, an evaluation value may be given to the registrant of the incompatibility information 13 and the registrant of the other piece of incompatibility information. Furthermore, the types of use results may include a proposal for correction of the incompatibility information 13. From this use result, an evaluation value may be given to a user who has proposed correction of the incompatibility information 13.

The processing unit 12 acquires use information for the database including the incompatibility information 13. Use information indicates a user of the incompatibility information 13 and a use result of the incompatibility information 13. Use information may include the name of a user or a user ID for identifying a user. The processing unit 12 may receive use information from another information processing device operated by a user.

The processing unit 12 determines the type of a use result indicated by the acquired use information. Then, based on the value master table 15, the processing unit 12 calculates an evaluation value to be given to one or both of the user indicated by the acquired use information and the registrant indicated by the registrant information 14 according to the identified type. The processing unit 12 may save the calculated evaluation value in the storage unit 11 or another storage device. Furthermore, the processing unit 12 may display the calculated evaluation value on a display device. Furthermore, the processing unit 12 may transmit the calculated evaluation value to another information processing device.

For example, the processing unit 12 acquires pieces of use information 16 and 17. The use information 16 indicates that user B has used the incompatibility information 13 for the incompatibility absorption from the first software to the second software. The use information 17 indicates that user C has found that the incompatibility information 13 may be applied to incompatibility absorption from third software to fourth software. From the use information 16, the processing unit 12 calculates an evaluation value 18a to be given to user B who is a user, and calculates an evaluation value 18b to be given to user A who is a registrant. Furthermore, from the use information 17, the processing unit 12 calculates an evaluation value 19 to be given to user C who is a user.

As described above, the information processing device 10 of the first embodiment acquires use information indicating a user and a use result of the incompatibility information 13, and, based on the value master table 15, calculates an evaluation value to be given to at least one of the user and the registrant according to the type of the use result. Accordingly, the value of registration of the incompatibility information 13 in a shared database and the value of use of the incompatibility information 13 are evaluated, and an incentive is given to the registrant and the user. Therefore, use of the shared database including incompatibility information is promoted. As a result, knowledge for incompatibility absorption is shared among a plurality of users, and the work of incompatibility absorption is streamlined.

### [Second Embodiment]

Next, a second embodiment will be described. An information processing system of the second embodiment analyzes the source code of a program that uses a database product, and supports correction work when the database product to be used is changed. A change of database product includes a change between database products provided from different software vendors and a change between different versions provided from the same software vendor. Incompatibility may exist between database products. Correcting the source code so as to resolve a failure due to incompatibility may be referred to as incompatibility absorption.

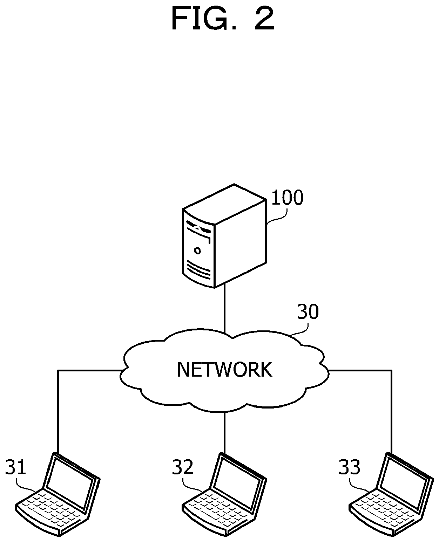

FIG. 2 is a diagram illustrating an example of the information processing system of the second embodiment.

The information processing system of the second embodiment includes a plurality of terminal devices such as terminal devices 31, 32, and 33 and an information processing device 100 that are coupled to a network 30. The network 30 may include a local area network (LAN) and may include the Internet. The terminal devices 31, 32, and 33 are client computers operated by users. The information processing device 100 is a server computer accessed from the terminal devices 31, 32, and 33. The information processing device 100 corresponds to the information processing device 10 of the first embodiment.

Each of the plurality of terminal devices including the terminal devices 31, 32, and 33 is used by a user who plays a role in incompatibility absorption. A user may also be referred to as an engineer (technician). However, a user may be an organization including a plurality of engineers. The information processing device 100 manages a database that accumulates incompatibility information, and monitors the use status of the database. In order to promote use of the database, the information processing device 100 gives points as an incentive to related users according to the use status. Points may also be referred to as an evaluation value. Points given to a user may be used for personnel evaluation of the user.

Incompatibility information is knowledge information shared by a plurality of users. The database of incompatibility information is a shared database shared by a plurality of users. Incompatibility information is associated with a pair of a database product before change and a database product after change. Incompatibility information indicates an identification method of identifying an incompatible portion from the source code and a rewrite method of rewriting the identified incompatible portion so as to resolve the incompatibility.

Among users, a user who registers new incompatibility information in the database is included. This user may be referred to as a registrant. For example, the terminal device 31 is used by a registrant. The terminal device of a registrant designates identifiers of database products before and after change, and transmits incompatibility information to the information processing device 100.

Furthermore, among users, a user who approves new incompatibility information is included. This user may be referred to as an approver. For example, the terminal device 32 is used by an approver. An approver confirms that incompatibility information operates correctly before the incompatibility information is formally registered in the database. Candidates for an approver may be determined in advance, such as a boss of a registrant and an experienced engineer. The terminal device of an approver transmits an approval message to the information processing device 100 when incompatibility information is approved. After waiting for an approval message from an approver, the information processing device 100 formally registers new incompatibility information in the database.

Furthermore, among users, a user who has confirmed that existing incompatibility information is applicable to another database product is included. Application to another database product may be referred to as inheritance, and this user may be referred to as an inheritance applicant. Inheritance is that at least one of a database product before change and a database product after change is different.

The terminal device of an inheritance applicant designates an identifier of incompatibility information and identifiers of database products before and after change, and transmits an inheritance application message to the information processing device 100. Also in the case of inheritance, an approval by an approver is performed as in the case of new registration. After waiting for an approval message from an approver, the information processing device 100 associates the applied database products with the incompatibility information.

Furthermore, among users, a user who has applied incompatibility information registered in the database to a known database product as it is, is included. This use form may be referred to as simple use, and this user may be referred to as a use applicant. For example, the terminal device 33 is used by a use applicant. The terminal device of a use applicant designates an identifier of incompatibility information, and transmits a use result message to the information processing device 100.

Furthermore, among users, a user who corrects existing incompatibility information is included. This user may be referred to as a corrector. In a case where incompatibility information is used, when a bug is included in the incompatibility information, the incompatibility information may not operate correctly. A bug of incompatibility information includes that the source code converted in accordance with the incompatibility information is not correctly executed in a database product after change. In such case, a user may correct the incompatibility information.

The terminal device of a corrector designates an identifier of incompatibility information, and transmits the corrected incompatibility information to the information processing device 100. Also in the case of correction, an approval by an approver is performed as in the case of new registration. After waiting for an approval message from an approver, the information processing device 100 formally registers the corrected incompatibility information in the database.

Furthermore, among users, a user who has used part of information included in existing incompatibility information for a purpose different from the purpose of the entire incompatibility information, is included. As will be described later, part of information of incompatibility information may be referred to as incompatibility sub-information. Incompatibility sub-information may be incorporated into another piece of incompatibility information. This use form may be referred to as component use, and this user may be referred to as a component use applicant. The terminal device of a component use applicant designates an identifier of incompatibility sub-information, and transmits a use result message to the information processing device 100.

Here, the information processing device 100 may provide a user with a user interface that supports use of incompatibility information, such as searching for available incompatibility information. For example, the terminal device of a user designates identifiers of database products before and after change, and transmits the source code before conversion to the information processing device 100. The information processing device 100 analyzes the source code and collates the source code with incompatibility information associated with the designated database products.

The information processing device 100 notifies the terminal device of a user of an incompatible portion in the source code, matching incompatibility information, and a rewrite method for resolving the incompatibility. The information processing device 100 may tentatively execute the rewrite method of the incompatibility information for the source code, and transmit an image of the source code after conversion to the terminal device of a user. The work before the source code is formally converted may be referred to as assessment.

In a case where the source code is tentatively converted in assessment, the information processing device 100 may determine whether the source code after conversion includes another incompatible portion. Another piece of incompatibility information is used for this determination. When the source code after conversion includes another incompatible portion, there is a possibility that a certain piece of incompatibility information is causing the other incompatibility, and there is a possibility that two pieces of incompatibility information conflict with each other. In this case, the information processing device 100 also presents the conflicting incompatibility information to a user. Presentation of another piece of related incompatibility information may be referred to as recommendation of incompatibility information, and use of two pieces of related incompatibility information may be referred to as combination of incompatibility information.

The user presented with the conflicting incompatibility information may give up the use of the original incompatibility information or may use both of the rewrite methods of the two pieces of incompatibility information. Note that, in the second embodiment, a case in which the original incompatibility information is syntax incompatibility information and the conflicting incompatibility information is performance incompatibility information is mainly assumed. Syntax incompatibility information indicates a rewrite method of rewriting a syntax that is not supported by a database product after change. Performance incompatibility information indicates a syntax in which the execution performance of a database product after change is significantly degraded, and may indicate a rewrite method of resolving the performance degradation. Although a failure that the source code does not operate in a database after change is resolved by syntax incompatibility information, another failure that the execution performance is significantly degraded may occur.

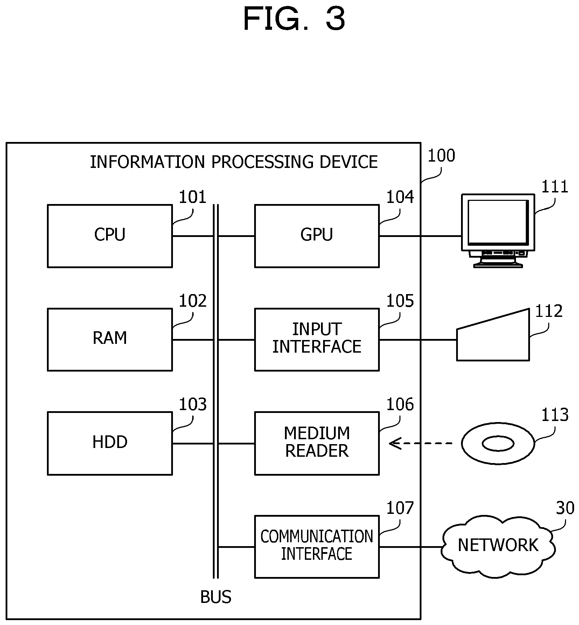

FIG. 3 is a block diagram illustrating a hardware example of the information processing device.

The information processing device 100 includes a CPU 101, a RAM 102, an HDD 103, a GPU 104, an input interface 105, a medium reader 106, and a communication interface 107 that are coupled to a bus. The CPU 101 corresponds to the processing unit 12 of the first embodiment. The RAM 102 or the HDD 103 corresponds to the storage unit 11 of the first embodiment. The terminal devices 31, 32, and 33 may include hardware similar to that of the information processing device 100.

The CPU 101 is a processor that executes instructions of a program. The CPU 101 loads at least a part of a program and data stored in the HDD 103 into the RAM 102 and executes the program. The information processing device 100 may include a plurality of processors. A set of processors may also be referred to as a multiprocessor or simply a "processor".

The RAM 102 is a volatile semiconductor memory that temporarily stores a program to be executed by the CPU 101 and data to be used for computation in the CPU 101. The information processing device 100 may include a volatile memory of a type other than the RAM.

The HDD 103 is a nonvolatile storage that stores a program of software such as an operating system (OS), middleware, and application software, and data. The information processing device 100 may include another type of nonvolatile storage such as a flash memory or a solid-state drive (SSD).

The GPU 104 generates an image in cooperation with the CPU 101, and outputs the image to a display device 111 coupled to the information processing device 100. For example, the display device 111 is a cathode ray tube (CRT) display, a liquid crystal display, an organic electroluminescence (EL) display, or a projector. Note that another type of output device such as a printer may be coupled to the information processing device 100.

The input interface 105 accepts an input signal from an input device 112 coupled to the information processing device 100. For example, the input device 112 is a mouse, a touch panel, or a keyboard. A plurality of input devices may be coupled to the information processing device 100.

The medium reader 106 is a reading device that reads a program and data recorded in a recording medium 113. For example, the recording medium 113 is a magnetic disk, an optical disc, or a semiconductor memory. The magnetic disk includes a flexible disk (FD) and an HDD. The optical disc includes a compact disc (CD) and a Digital Versatile Disc (DVD). The medium reader 106 copies the program and data read from the recording medium 113 to another recording medium such as the RAM 102 or the HDD 103. The read program may be executed by the CPU 101.

The recording medium 113 may be a portable-type recording medium. The recording medium 113 may be used for distribution of a program and data. Furthermore, the recording medium 113 and the HDD 103 may be referred to as a computer-readable recording medium.

The communication interface 107 is coupled to the network 30, and communicates with the terminal devices 31, 32, and 33 via the network 30. The communication interface 107 may be a wired communication interface coupled to a wired communication device such as a switch or a router, or may be a wireless communication interface coupled to a wireless communication device such as a base station or an access point.

Next, a flow of incompatibility absorption by the information processing system will be described.

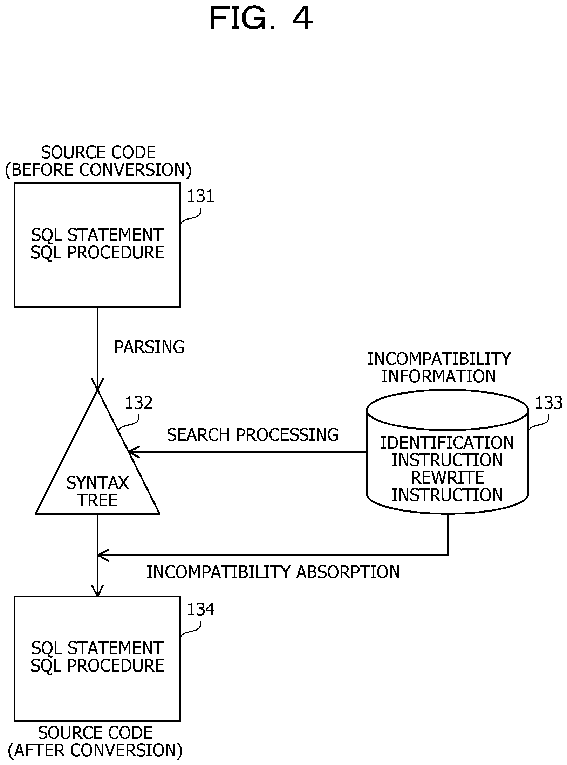

FIG. 4 is a diagram illustrating an example of a flow of incompatibility absorption of database products.

The information processing system acquires source code 131 dependent on a database product before change. The source code 131 includes an SQL statement or SQL procedure code. An SQL statement is a database query described using SQL. Although the basic specifications of SQL are standardized, some database products have unique specifications in which the basic specifications are extended. SQL procedure code is a program of a procedure-type language defined to be consistent with SQL, and operates as a stored procedure.

The information processing system performs parsing of the source code 131 and generates a syntax tree 132. The syntax tree 132 is tree-type data indicating a structure of language elements such as a statement, a clause, a phrase, and a word. Unlike a case where only lexical analysis is performed, the syntax tree 132 generated through parsing may express a context in which each word appears in the source code 131. For example, in an SQL statement or SQL procedure code, even when variables are the same, the effective ranges of the variables may differ depending on the position where the variables are described. For this reason, the syntax tree 132 is useful in incompatibility absorption. However, the information processing system does not have to perform semantic analysis on the source code 131, and the syntax tree 132 does not have to include semantic information indicating the logical meaning of a language element.

The information processing system holds, as knowledge information, incompatibility information 133 associated with a pair of a database product before change and a database product after change. A database product may be identified by a pair of a product name and a version number. The incompatibility information 133 includes a column of identification instruction and a column of rewrite instruction. An identification instruction is an instruction for identifying, from the syntax tree 132, an incompatible portion that normally operates in a database product before change but has a possibility of causing a failure in a database product after change. A rewrite instruction is an instruction for rewriting the syntax tree 132 so that a failure does not occur in a database product after change for an incompatible portion identified by an identification instruction.

The information processing system executes an identification instruction included in the incompatibility information 133 for the syntax tree 132. When an incompatible portion is detected from the syntax tree 132 by the identification instruction, the information processing system executes a rewrite instruction included in the incompatibility information 133 for the syntax tree 132 and performs incompatibility absorption. Accordingly, the syntax tree 132 is rewritten so as to resolve the incompatibility. The information processing system generates source code 134 from the rewritten syntax tree 132. The source code 134 is a result of performing incompatibility absorption for the source code 131, and is source code for a database product after change.

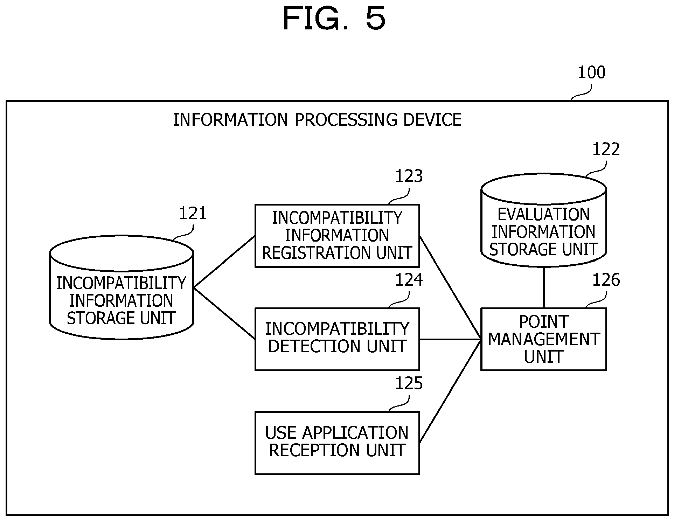

FIG. 5 is a block diagram illustrating a function example of the information processing device.

The information processing device 100 includes an incompatibility information storage unit 121 and an evaluation information storage unit 122. For example, these storage units are implemented by using the RAM 102 or the HDD 103. Furthermore, the information processing device 100 includes an incompatibility information registration unit 123, an incompatibility detection unit 124, a use application reception unit 125, and a point management unit 126. For example, these processing units are implemented by using the CPU 101 and a program.

The incompatibility information storage unit 121 stores incompatibility information. Furthermore, the incompatibility information storage unit 121 stores management information for searching for available incompatibility information from a pair of a database product before change and a database product after change. Incompatibility information includes syntax incompatibility information and performance incompatibility information. Syntax incompatibility is a syntax error in which the syntax of SQL or an SQL procedure language that has been allowed in a database product before change is not allowed in a database product after change. Syntax incompatibility information includes an identification instruction indicating a procedure for identifying an incompatible portion from a syntax tree and a rewrite instruction indicating a procedure for rewriting the identified incompatible portion. Performance incompatibility is that, for the same function, the performance of a database product after change is significantly low compared to that of a database product before change.

The evaluation information storage unit 122 stores evaluation information for calculating points of users involved in incompatibility information. Master information indicating a calculation method of points is included in the evaluation information. The calculation method of points is determined in advance by an administrator of the information processing system.

The incompatibility information registration unit 123 receives the identifiers of database products before and after change and new incompatibility information from the terminal device of a registrant. Then, the incompatibility information registration unit 123 selects a candidate for an approver and transmits an approval request message, and receives an approval message from the terminal device of the approver. The incompatibility information registration unit 123 saves the new incompatibility information in the incompatibility information storage unit 121 in association with the designated database products before and after change. At this time, the incompatibility information registration unit 123 reports the new registration to the point management unit 126.

Furthermore, the incompatibility information registration unit 123 receives, from the terminal device of an inheritance applicant, the identifier of incompatibility information and the identifiers of database products before and after change. Then, the incompatibility information registration unit 123 selects a candidate for an approver and transmits an approval request message, and receives an approval message from the terminal device of the approver. The incompatibility information registration unit 123 updates the management information in the incompatibility information storage unit 121, and associates the designated incompatibility information with the designated database products before and after change. At this time, the incompatibility information registration unit 123 reports the inheritance to the point management unit 126.

Here, inheritance of existing incompatibility information may be streamlined by being performed by the registrant of the incompatibility information. Furthermore, since the work load of inheritance of existing incompatibility information is small compared to that of creation of new incompatibility information, the fairness of evaluation between users is achieved by being preferentially performed by the registrant of the incompatibility information. Accordingly, the incompatibility information registration unit 123 sets a certain period after the appearance of a new database product as a priority period during which the original registrant may preferentially be an inheritance applicant for the new database product. In a case where the original registrant does not apply for inheritance even after the priority period has elapsed, another user may be the inheritance applicant. Furthermore, within the priority period, the approver at the time of new registration may preferentially be the approver of inheritance.

Furthermore, the incompatibility information registration unit 123 receives the identifier of incompatibility information and the corrected incompatibility information from the terminal device of a corrector. Then, the incompatibility information registration unit 123 selects a candidate for an approver and transmits an approval request message, and receives an approval message from the terminal device of the approver. The incompatibility information registration unit 123 updates the incompatibility information stored in the incompatibility information storage unit 121. At this time, the incompatibility information registration unit 123 reports the correction to the point management unit 126.

The incompatibility detection unit 124 receives the identifiers of database products before and after change and the source code from a terminal device. Then, the incompatibility detection unit 124 searches the incompatibility information storage unit 121 for the incompatibility information corresponding to the designated database products before and after change. Furthermore, the incompatibility detection unit 124 performs parsing of the source code and generates a syntax tree. The incompatibility detection unit 124 executes an identification instruction included in the syntax incompatibility information for the syntax tree, and detects an incompatible portion. The incompatibility detection unit 124 returns assessment information including the detected incompatible portion and a rewrite method indicated by the syntax incompatibility information to the terminal device.

At this time, the incompatibility detection unit 124 tentatively executes a rewrite instruction included in the syntax incompatibility information for the syntax tree, and searches for performance incompatibility information matching the syntax tree after conversion. When there exists matching performance incompatibility information, the incompatibility detection unit 124 causes the performance incompatibility information to be further included in the assessment information, and recommends use of the performance incompatibility information. In such case, the incompatibility detection unit 124 reports the recommendation of combination to the point management unit 126.

The use application reception unit 125 receives the identifier of incompatibility information from the terminal device of a use applicant. Then, the use application reception unit 125 reports the use application to the point management unit 126. Furthermore, the use application reception unit 125 receives the identifier of incompatibility sub-information from the terminal device of a use applicant. Then, the use application reception unit 125 reports the component use to the point management unit 126.

The point management unit 126 accepts reports from the incompatibility information registration unit 123, the incompatibility detection unit 124, and the use application reception unit 125. The point management unit 126 calculates points to be given to one or more users for each report in accordance with the master information stored in the evaluation information storage unit 122, and records the calculated points in the evaluation information storage unit 122.

In the case of new registration, the point management unit 126 gives points to the registrant and the approver. In the case of inheritance, the point management unit 126 gives points to the inheritance applicant and the current approver. In the case of use application, the point management unit 126 gives points to the use applicant and to the registrant and the approver of the used incompatibility information. In the case of correction, the point management unit 126 gives points to the corrector and the current approver. In the case of component use, the point management unit 126 gives points to the use applicant and to the registrant and the approver of the incompatibility information including the used incompatibility sub-information. In the case of recommendation of combination, the point management unit 126 gives points to the registrant and the approver of the syntax incompatibility information and to the registrant and the approver of the performance incompatibility information.

Next, a data structure of source code and incompatibility information will be described.

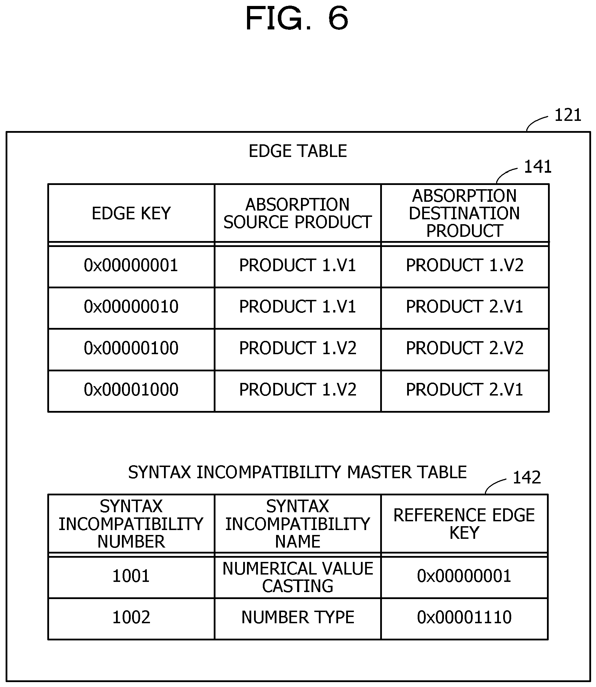

FIG. 6 is a diagram illustrating an example of an edge table and a syntax incompatibility master table.

The incompatibility information storage unit 121 stores an edge table 141. The edge table 141 manages an edge representing a pair of a database product before change and a database product after change. A database product before change may be referred to as an incompatibility absorption source, and a database product after change may be referred to as an incompatibility absorption destination. A database product is identified by a product name and a version number. One record in the edge table 141 corresponds to one edge. Each record includes an edge key, an absorption source product, and an absorption destination product.

An edge key is a bit string for identifying an edge. Different edge keys are assigned to different edges. Among the plurality of bits included in an edge key, the value of any one bit is 1, and the values of the other bits are 0. Therefore, an edge is identified by the position of the bit whose value is 1. An edge key may be referred to as a bitmap. An absorption source product is a database product before change, and an absorption destination product is a database product after change.

For example, a certain edge key represents incompatibility absorption from version 1 of product 1 to version 2 of product 1. Furthermore, a certain edge key represents incompatibility absorption from version 1 of product 1 to version 1 of product 2. Furthermore, a certain edge key represents incompatibility absorption from version 2 of product 1 to version 2 of product 2. Furthermore, a certain edge key represents incompatibility absorption from version 2 of product 1 to version 1 of product 2.

Furthermore, the incompatibility information storage unit 121 stores a syntax incompatibility master table 142. The syntax incompatibility master table 142 manages syntax incompatibility information. One record in the syntax incompatibility master table 142 corresponds to one piece of syntax incompatibility information. Each record includes an incompatibility number, a syntax incompatibility name, and a reference edge key.

An incompatibility number is an identification number for identifying syntax incompatibility information. A syntax incompatibility name is a character string that clearly represents a feature of an incompatible portion that is made a target of detection and rewrite by syntax incompatibility information. A syntax incompatibility name may be determined by the registrant of syntax incompatibility information. A reference edge key is a bit string indicating edges for which syntax incompatibility information is valid. A reference edge key is a logical sum of the edge keys allocated to one or more edges for which syntax incompatibility information is valid. There may exist two or more pieces of syntax incompatibility information valid for one edge, and one piece of syntax incompatibility information may be valid for two or more edges. Therefore, edges and syntax incompatibility information are associated in a many-to-many manner via a reference edge key.

One edge key includes only one bit whose value is 1, and the positions of bits whose value is 1 are different between different edge keys. Therefore, in a case where syntax incompatibility information is related to n edges, the reference edge key includes n bits whose value is 1. In a case where syntax incompatibility information valid for a certain pair of database products, that is, a certain edge, is searched for, the incompatibility detection unit 124 calculates a logical product of the edge key of the edge and the reference edge key of each piece of syntax incompatibility information. Syntax incompatibility information for which the logical product is 0 is not valid for the edge. On the other hand, syntax incompatibility information for which the logical product is not 0 is valid for the edge. Accordingly, the incompatibility detection unit 124 may search for related syntax incompatibility information at high speed.

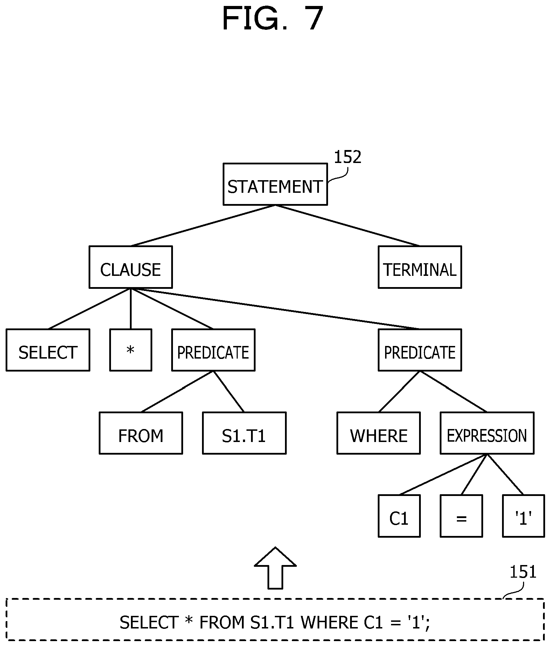

FIG. 7 is a diagram illustrating an example of source code before conversion and a syntax tree.

Here, the syntax of an SQL statement will be described. A statement includes a terminal symbol at the end. A statement may include a clause before a terminal symbol. A clause includes an instruction word at the head, and includes a phrase, an expression, or a word between the instruction word and a terminal symbol. A phrase includes an object type, a preposition, an adverb, or a parenthesis at the head. A phrase subsequently includes a phrase, an expression, or a word, and a phrase, an expression, or a word may be consecutive two or more times. A phrase may subsequently include a clause. An expression includes a function name or a word, and subsequently includes an operator.

A terminal symbol represents the end of a statement. A terminal symbol may be a semicolon (";"). A word is the smallest linguistic unit having a meaning in a statement. A word includes an identifier, a reserved word, a function name, and an operator. A reserved word includes an instruction word, an object type, and other reserved words. An instruction word indicates an instruction such as CREATE or UPDATE. An object type indicates a type of an object such as TABLE. Other reserved words are reserved words other than an instruction word and an object type, such as BEGIN. An expression includes a pair of a word and a word connected by an operator and a pair of a word and an expression connected by an operator. Furthermore, an expression includes a pair of a function name and an argument. An argument is sandwiched between an open parenthesis ("(") and a close parenthesis (")").

A phrase includes a general phrase, a predicate phrase, a suffix phrase, a definition phrase, and an unclassified phrase. A general phrase is a pair of a modifier and an object. For example, a pair of an object type and an identifier is a general phrase, as in TABLE T1. A predicate phrase includes a pair of a preposition and an object, as in FROM T1 and AS T2. Furthermore, a predicate phrase includes a pair of an adverb and an object, as in WHERE C1. A suffix phrase is sandwiched between an open parenthesis and a close parenthesis, and may be used for designation of a data type or designation of a key column. A definition phrase is a language element that designates a type of a variable, and includes a word other than a reserved word and a reserved word indicating a data type. An unclassified phrase is a phrase that does not fall under any of a general phrase, a predicate phrase, a suffix phrase, and a definition phrase.

A syntax tree 152 indicates the syntax of source code 151. The source code 151 includes the SQL statement SELECT * FROM S1.T1 WHERE C1 = '1';. The syntax tree 152 is an undirected graph of a tree structure. The syntax tree 152 includes a plurality of nodes each indicating a language element and a plurality of edges connecting the plurality of nodes to the tree structure. An edge between an upper node and a lower node represents that a language element corresponding to the lower node is included in a language element corresponding to the upper node. The appearance order of a plurality of language elements is held in the same level. A language element corresponding to the left node appears before a language element corresponding to the right node.

The syntax tree 152 includes eight word nodes corresponding to the keywords SELECT, *, FROM, S1.T1, WHERE, C1, =, and '1'. Furthermore, the syntax tree 152 includes one statement node, one clause node, two predicate phrase nodes, one expression node, and one terminal symbol node. Note that each node has attributes such as a type and a value of a language element. In the illustrated examples of a syntax tree, only some attributes are displayed. Furthermore, a terminal symbol may be described as "terminal", a general phrase as "phrase", a predicate phrase as "predicate", a suffix phrase as "suffix", a definition phrase as "definition", and an unclassified phrase as "unclassified".

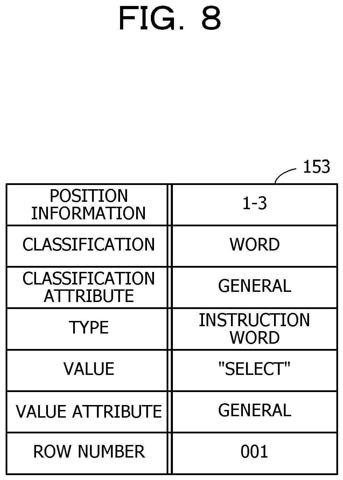

FIG. 8 is a diagram illustrating an example of attribute information.

Attribute information 153 is associated with one node of a syntax tree. The attribute information 153 includes position information, classification, classification attribute, type, value, value attribute, and row number. However, depending on the type of a node, the item values of some items may not be defined.

Position information indicates the position of a node in a syntax tree. As will be described later, the position of a node is represented by two dimensional coordinates including a vertical position and a horizontal position. Classification indicates the uppermost classification such as statement, clause, phrase, expression, word, and the like. Classification attribute indicates the distinction between general node and interpolation node. A general node indicates a language element that is directly extracted from a description of the source code. An interpolation node indicates a language element that is not explicitly described in the source code but is interpolated for interpretation. Type is a group obtained by further fragmenting classification, such as general phrase and instruction word. Value is a character string of a word. Value attribute is a type of a value. Value attribute includes general character string and interpolation character string. Row number is the number of a row where the language element corresponding to the node appears in the source code.

A syntax tree may be represented as a syntax table of a two dimensional table format. Accordingly, identification of the position of a node is easy, and identification of nodes and description of the procedure of a node search are easy. Nodes included in a syntax tree are arranged in a syntax table in accordance with the following rules.

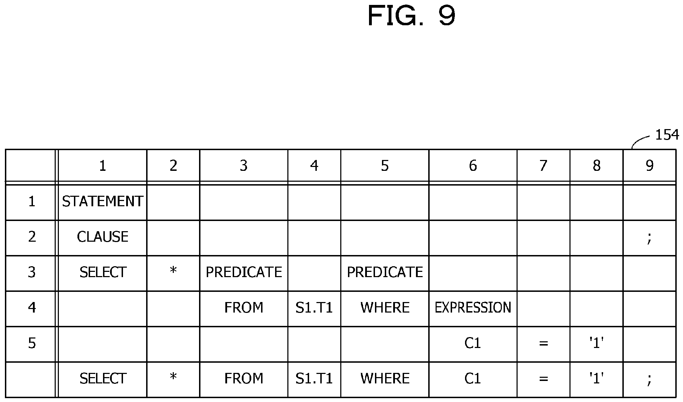

FIG. 9 is a diagram illustrating an example of a syntax table.

A syntax table 154 is a syntax table equivalent to the syntax tree 152 in FIG. 7. The position coordinates of the upper left cell in the syntax table 154 are (1, 1). As the position of a cell progresses downward, the row number indicating a vertical position increases, and as the position of a cell progresses rightward, the column number indicating a horizontal position increases. The position of each cell is designated by two dimensional coordinates of (row number, column number).

The node indicating a statement is arranged in the upper left cell of the syntax table 154. The leftmost child node among child nodes directly below a certain node is arranged in a cell immediately below the cell corresponding to the node. A cell immediately below is a cell whose row number is larger by one and whose column number is the same. Another node that has the same parent node as a certain node and is on the right side of the node, is arranged in a cell on the right side of the cell corresponding to the node. A cell on the right side is a cell whose row number is the same and whose column number is larger by one. A cell in which each node is arranged is determined in the order of depth priority.

One word node included in a syntax tree is arranged in one column. Therefore, while the row numbers of two nodes in a parent-child relationship are continuous, the column numbers of two nodes having the same parent node may be discontinuous. Accordingly, the word nodes corresponding to the nine words included in the source code 151 are arranged from the first column to the ninth column of the syntax table 154 while maintaining the order. The syntax table 154 and the syntax tree 152 may be mutually converted. Syntax incompatibility information includes one or more identification instructions for searching for a node satisfying a condition in a syntax tree and one or more rewrite instructions for rewriting some nodes included in the syntax tree.

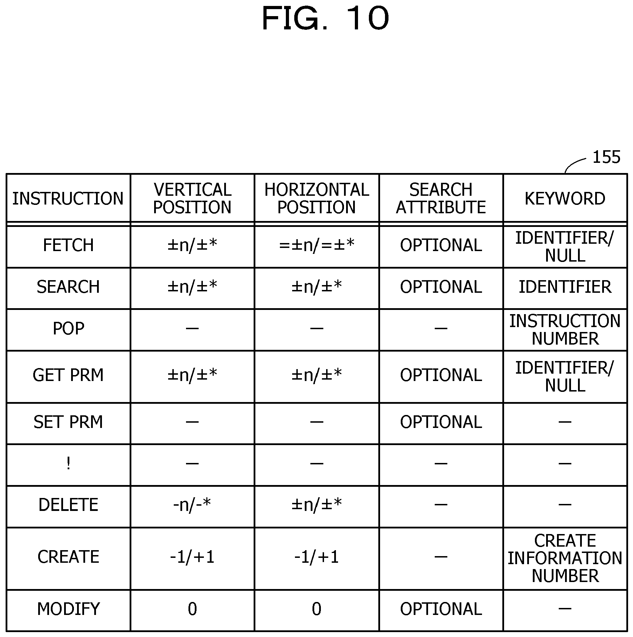

FIG. 10 is a diagram illustrating an example of an instruction table.

An instruction table 155 indicates the definitions of instructions that may be used in syntax incompatibility information. One record in the instruction table 155 indicates one instruction. One record in the instruction table 155 includes an instruction, a vertical position, a horizontal position, a search attribute, and a keyword.

A vertical position, a horizontal position, a search attribute, and a keyword are arguments of an instruction. A vertical position is a condition for a positional relationship in the up-down direction between the current node of interest and a target node. + indicates an upward direction, - indicates a downward direction, n indicates the distance from the current node, and * indicates no distance limitation. A horizontal position is a condition for a positional relationship in the left-right direction between the current node of interest and a target node. = indicates the same horizontal position as the current node, + indicates the rightward direction, - indicates the leftward direction, n indicates the distance from the current node, and * indicates no distance limitation.

A horizontal position may be designated in the format of [instruction number]. This indicates that a search is performed with the horizontal position of a node selected by the instruction having the instruction number as the starting point. Furthermore, a horizontal position may be designated in the format of [instruction number 1:instruction number 2]. This indicates that a search is performed between the horizontal position of a node selected by the instruction having the instruction number 1 and the horizontal position of a node selected by the instruction having the instruction number 2. A search attribute is a condition for the classification, classification attribute, type, and value attribute of a target node.

A keyword is information other than a search attribute for identifying a node. A keyword may be an identifier as the value of a word. Furthermore, as a keyword, instruction number of an executed instruction may be designated. This indicates that the node identified by the instruction is to be reselected. Furthermore, an action to be executed when a result of an instruction is true, that is, when a node satisfying a condition exists, may be defined in association with the instruction.

No action indicates proceeding to the next instruction. RET indicates returning to the instruction when the next instruction is executed and a result of the next instruction is false. When a node satisfying a condition is not detected in the next instruction, the result of the next instruction is determined to be false. Furthermore, another instruction itself using the attribute information of the current node of interest may be defined as an action.

Instructions include FETCH, SEARCH, POP, GET PRM, SET PRM, !, DELETE, CREATE, and MODIFY. FETCH, SEARCH, POP, GET PRM, SET PRM, and ! may be used as identification instructions. DELETE, CREATE, and MODIFY may be used as rewrite instructions.

FETCH is an instruction of searching for a node satisfying a condition and changing the current node of interest (current node) to the detected node. SEARCH is an instruction of searching for a node satisfying a condition but not changing the current node. POP is an instruction of returning the current node to the node selected by executed FETCH. GET PRM is an instruction of saving the attribute information of a node satisfying a condition in a stack. SET PRM is an instruction of outputting the attribute information saved in the stack. SET PRM may be used in a keyword of FETCH or SEARCH. ! is a negation instruction of inverting true and false. By adding ! before SEARCH, the result of the instruction is determined to be true when a node satisfying a condition is not detected.

DELETE is an instruction of deleting, from a syntax tree, a node in a designated range based on the current node. CREATE is an instruction of inserting a subtree before or after the current node. The subtree to be inserted is saved as CREATE information separately from an instruction string. CREATE has, as an argument, a CREATE information number for identifying CREATE information. MODIFY is an instruction of rewriting the attribute information of the current node. A regular expression program may be designated in an action.

Usually, syntax incompatibility information first searches for the most characteristic keyword related to an incompatible portion. The first keyword may be referred to as an anchor, and a search for the anchor from a syntax tree may be referred to as an anchor search. The syntax incompatibility information searches for peripheral nodes having an attribute satisfying a condition from the periphery of the anchor in a syntax tree. Accordingly, a node set forming the incompatible portion is identified. A feature of an incompatible portion may be referred to as a unique condition. When the incompatible portion is detected, the syntax incompatibility information searches for a node to be rewritten with any of the detected nodes as a base point. The base point may be the anchor.

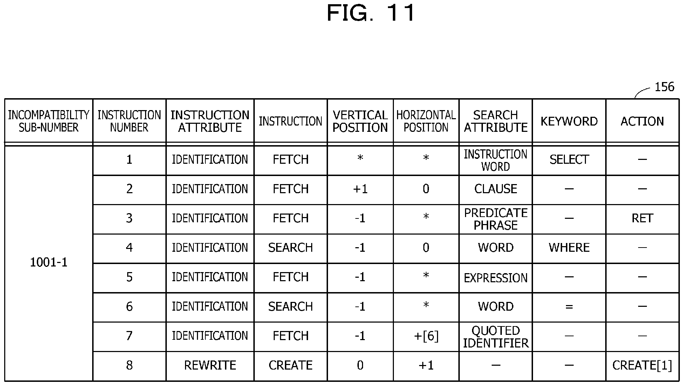

FIG. 11 is a diagram illustrating an example of syntax incompatibility information.

Syntax incompatibility information 156 is stored in the incompatibility information storage unit 121. The syntax incompatibility information 156 is an example of syntax incompatibility information applied to the syntax tree 152 illustrated in FIG. 7. Here, the syntax C1 = '1' included in the source code 151 is not supported in the database product after change, and the syntax incompatibility is resolved by rewriting it to C1 = '1' : :NUMERIC. One record in the syntax incompatibility information 156 corresponds to one identification instruction or one rewrite instruction. Each record of the syntax incompatibility information 156 includes an instruction number, an instruction attribute, an instruction, a vertical position, a horizontal position, a search attribute, a keyword, and an action.

Instruction numbers are natural numbers in ascending order indicating the execution order of instructions. An instruction attribute indicates the distinction between identification instruction and rewrite instruction. A vertical position, a horizontal position, a search attribute, and a keyword are arguments of an instruction. An action indicates processing to be executed when a result of an instruction is true. The syntax incompatibility information 156 includes eight instructions of the first instruction to the eighth instruction. The first instruction to the seventh instruction are identification instructions, and the eighth instruction is a rewrite instruction.

The first instruction searches for a node whose type is instruction word and whose value is SELECT, and selects the node as the current node. The second instruction searches for a node whose vertical position is immediately above the current node and whose classification is clause, and selects the node as the current node. The third instruction searches for a node whose vertical position is immediately below the current node and whose type is predicate phrase, and selects the node as the current node. In a case where there is a plurality of nodes corresponding to the third instruction, one node is selected and the following fourth instruction is executed. When a result of the fourth instruction is false, the processing returns to the third instruction and another node is selected. The fourth instruction searches for a node whose vertical position is immediately below the current node, whose classification is word, and whose value is WHERE.

The fifth instruction searches for a node whose vertical position is immediately below the current node and whose type is expression, and selects the node as the current node. The sixth instruction searches for a node whose vertical position is immediately below the current node, whose classification is word, and whose value is an equal sign. The seventh instruction searches for a node whose vertical position is immediately below the current node, whose horizontal position is on the right side of the node detected in the sixth instruction, and whose type is quoted identifier, and selects the node as the current node. The eighth instruction adds ::NUMERIC designated by the CREATE information number in the action field to the right of the current node.

Note that, as will be described later, syntax incompatibility information may include two or more pieces of incompatibility sub-information. For this reason, an incompatibility sub-number for identifying incompatibility sub-information is assigned to a range of instructions belonging to the same incompatibility sub-information. In a case where syntax incompatibility information is not divided into two or more pieces of incompatibility sub-information, the entirety of the syntax incompatibility information is interpreted to be one piece of incompatibility sub-information. For example, the first instruction to the eighth instruction included in the syntax incompatibility information 156 belong to the same incompatibility sub-information, and one incompatibility sub-number is assigned to the range of the first instruction to the eighth instruction.

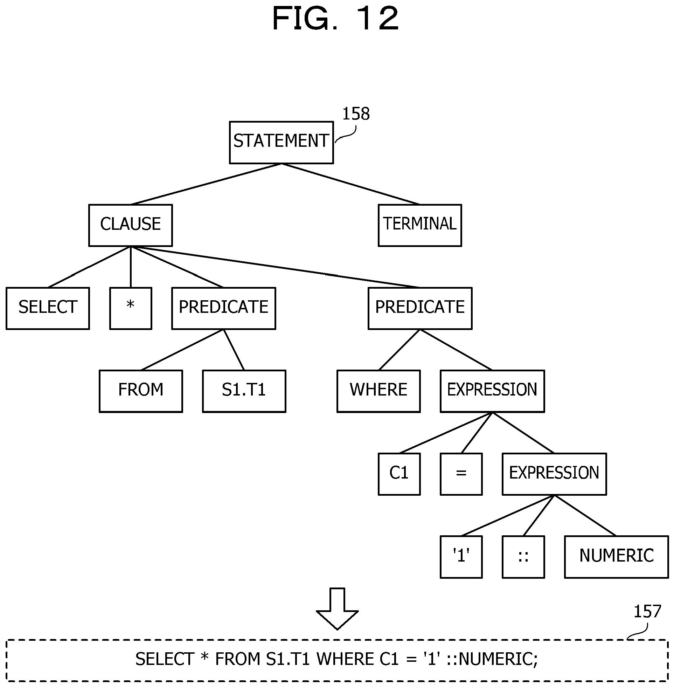

FIG. 12 is a diagram illustrating an example of source code after conversion and a syntax tree.

The incompatibility detection unit 124 generates a syntax tree 158 by executing the syntax incompatibility information 156 for the syntax tree 152. The syntax tree 158 includes ten word nodes corresponding to the keywords SELECT, *, FROM, S1.T1, WHERE, C1, =, '1', ::, and NUMERIC. Furthermore, the syntax tree 158 includes one statement node, one clause node, two predicate phrase nodes, two expression nodes, and one terminal symbol node. The syntax tree 158 corresponds to source code 157. The source code 157 includes the SQL statement SELECT * FROM S1.T1 WHERE C1 = '1' ::NUMERIC;. Therefore, the source code 151 is converted into the source code 157.

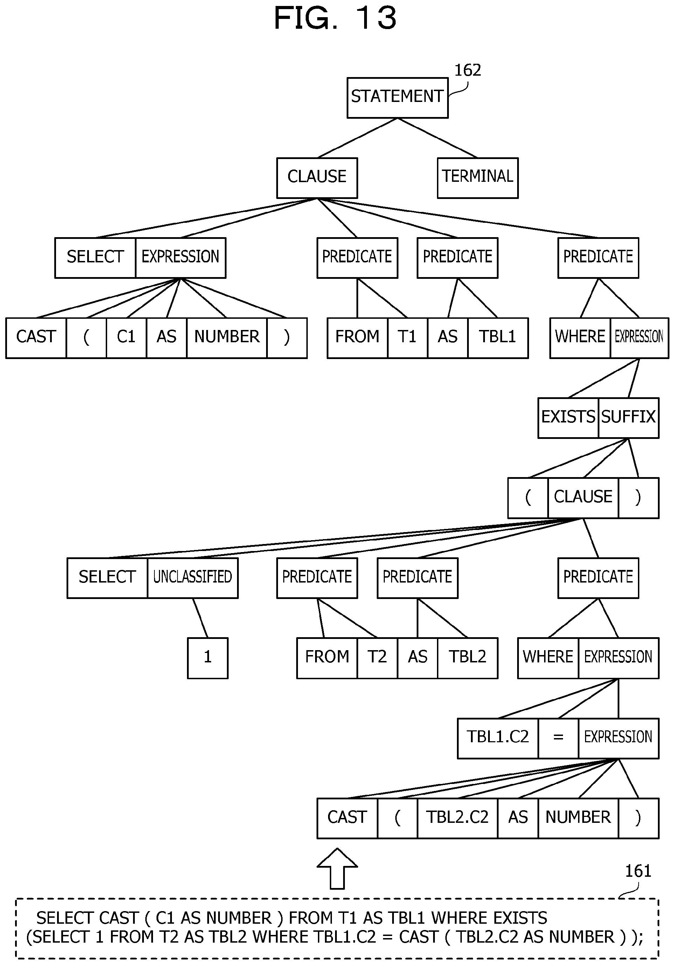

FIG. 13 is a diagram illustrating another example of source code before conversion and a syntax tree.

A syntax tree 162 indicates the syntax of source code 161. The source code 161 includes the SQL statement SELECT CAST(C1 AS NUMBER) FROM T1 AS TBL1 WHERE EXISTS(SELECT 1 FROM T2 AS TBL2 WHERE TBL1.C2 = CAST(TBL2.C2 AS NUMBER));. This SQL statement includes a subquery after WHERE EXISTS, and has a complicated syntax.

The syntax tree 162 includes 30 word nodes corresponding to the keywords SELECT, CAST, (, C1, AS, NUMBER, ), FROM, T1, AS, TBL1, WHERE, EXISTS, (, SELECT, 1, FROM, T2, AS, TBL2, WHERE, TBL1.C2, =, CAST, (, TBL2.C2, AS, NUMBER, ), and ). Furthermore, the syntax tree 162 includes one statement node, two clause nodes, six predicate phrase nodes, one suffix phrase node, one unclassified phrase node, four expression nodes, and one terminal symbol node.

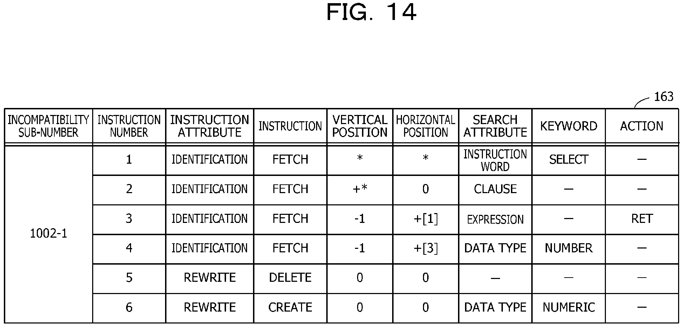

FIG. 14 is a diagram illustrating another example of syntax incompatibility information.

Syntax incompatibility information 163 is stored in the incompatibility information storage unit 121. The syntax incompatibility information 163 is an example of syntax incompatibility information applied to the syntax tree 162 in FIG. 13. Here, the data type NUMBER is not supported in the database product after change, and the syntax incompatibility is resolved by converting the data type from NUMBER to NUMERIC.

The syntax incompatibility information 163 includes 19 instructions of the first instruction to the 19th instruction. The first instruction to the fourth instruction are identification instructions of searching for the first data type, and the fifth instruction to the sixth instruction are rewrite instructions of rewriting the first data type. The seventh instruction to the 17th instruction are identification instructions of searching for the second data type, and the 18th instruction to the 19th instruction are rewrite instructions of rewriting the second data type. The first instruction to the sixth instruction belong to the first incompatibility sub-information, and the seventh instruction to the 19th instruction belong to the second incompatibility sub-information.

The first instruction searches the syntax tree 162 for a node whose type is instruction word and whose value is SELECT, and selects the node as the current node. The second instruction searches for a node whose vertical position is above the current node and whose classification is clause, and selects the node as the current node. The third instruction searches for a node whose vertical position is immediately below the current node, whose horizontal position is on the right side of SELECT of the first instruction, and whose classification is expression, and selects the node as the current node. The fourth instruction searches for a node whose vertical position is immediately below the current node, whose horizontal position is on the right side of the current node, whose type is data type, and whose value is NUMBER, and selects the node as the current node. When a result of the fourth instruction is false, the processing returns to the third instruction.

The fifth instruction deletes the current node. The sixth instruction generates a new node whose type is data type and whose value is NUMERIC, and inserts the new node at the position of the deleted node.

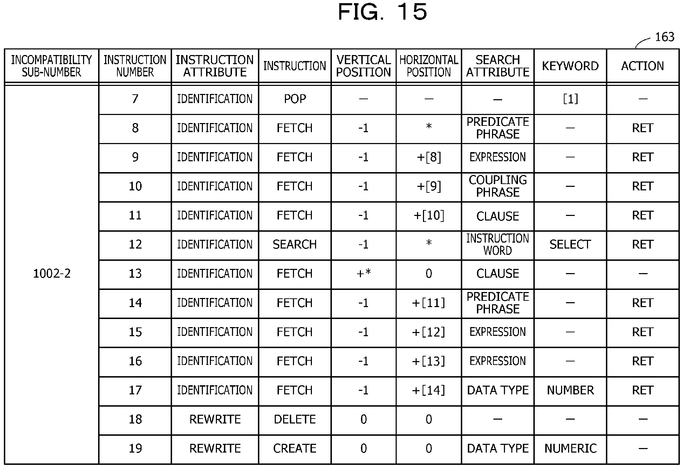

FIG. 15 is a diagram illustrating the other example of syntax incompatibility information (continued).

The seventh instruction returns the current node to the node of SELECT selected in the first instruction. The eighth instruction searches for a node whose vertical position is immediately below the current node and whose type is predicate phrase, and selects the node as the current node. The ninth instruction searches for a node whose vertical position is immediately below the current node, whose horizontal position is on the right side of the current node, and whose classification is expression, and selects the node as the current node. When a result of the ninth instruction is false, the processing returns to the eighth instruction. The tenth instruction searches for a node whose vertical position is immediately below the current node, whose horizontal position is on the right side of the current node, and whose type is coupling phrase, and selects the node as the current node. When a result of the tenth instruction is false, the processing returns to the ninth instruction.

The 11th instruction searches for a node whose vertical position is immediately below the current node, whose horizontal position is on the right side of the current node, and whose classification is clause, and selects the node as the current node. When a result of the 11th instruction is false, the processing returns to the tenth instruction. The 12th instruction searches for a node whose vertical position is immediately below the current node, whose type is instruction word, and whose value is SELECT. When a result of the 12th instruction is false, the processing returns to the 11th instruction. The 13th instruction searches for a node that is above SELECT of the 12th instruction and whose classification is clause, and selects the node as the current node. When a result of the 13th instruction is false, the processing returns to the 12th instruction.

The 14th instruction searches for a node whose vertical position is immediately below the current node, whose horizontal position is on the right side of the clause of the 11th instruction, and whose type is predicate phrase, and selects the node as the current node. The 15th instruction searches for a node whose vertical position is immediately below the current node, whose horizontal position is on the right side of SELECT of the 12th instruction, and whose classification is expression, and selects the node as the current node. When a result of the 15th instruction is false, the processing returns to the 14th instruction. The 16th instruction searches for a node whose vertical position is immediately below the current node, whose horizontal position is on the right side of the clause of the 13th instruction, and whose classification is expression, and selects the node as the current node. When a result of the 16th instruction is false, the processing returns to the 15th instruction.

The 17th instruction searches for a node whose vertical position is immediately below the current node, whose horizontal position is on the right side of the predicate phrase of the 14th instruction, whose type is data type, and whose value is NUMBER, and selects the node as the current node. When a result of the 17th instruction is false, the processing returns to the 16th instruction. The 18th instruction deletes the current node. The 19th instruction generates a new node whose type is data type and whose value is NUMERIC, and inserts the new node at the position of the deleted node.

As described above, complicated syntax incompatibility information may be divided into two or more pieces of incompatibility sub-information. Incompatibility sub-information of which reusability is high may be used for a purpose different from that of the original syntax incompatibility information, and may be used for other syntax incompatibility information.

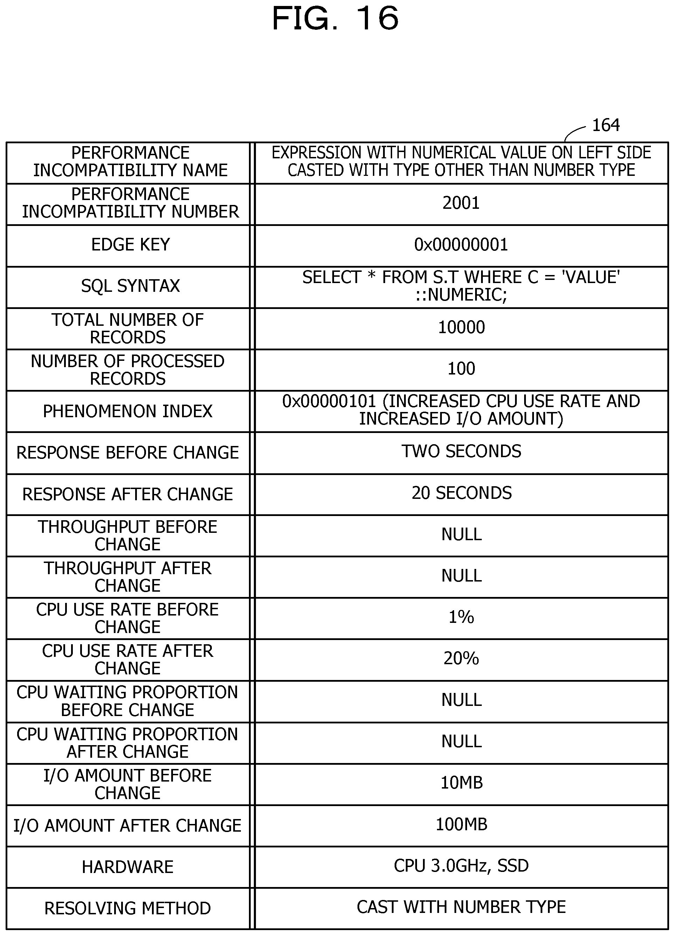

FIG. 16 is a diagram illustrating an example of performance incompatibility information.

Performance incompatibility information 164 is stored in the incompatibility information storage unit 121. Here, a case is considered in which a load for executing a certain SQL statement is high in a database product after change, while it is low in a database product before change. This performance incompatibility occurs in an SQL statement having the syntax SELECT * FROM S.T WHERE C = 'value' ::NUMERIC;. And it is possible to resolve this performance incompatibility by changing ::NUMERIC to ::NUMBER.

The performance incompatibility information 164 includes a performance incompatibility name, a performance incompatibility number, an edge key, an SQL syntax, the total number of records, the number of processed records, a phenomenon index, a response before change, a response after change, a throughput before change, and a throughput after change. Furthermore, the performance incompatibility information 164 includes a CPU use rate before change, a CPU use rate after change, a CPU waiting proportion before change, a CPU waiting proportion after change, an I/O amount before change, an I/O amount after change, hardware, and a resolving method.

A performance incompatibility name is a name that clearly represents the cause of occurrence of performance incompatibility. A performance incompatibility number is an identification number for identifying the performance incompatibility information 164. An edge key identifies a pair of an absorption source product and an absorption destination product to which the performance incompatibility information 164 is applied. An SQL syntax is the syntax of an SQL statement in which performance incompatibility occurs. The total number of records is the number of records that have been stored in database products when performance incompatibility is found. The number of processed records is the number of records that have become processing targets of an SQL statement when performance incompatibility is found.

A phenomenon index is a set of flags indicating the types of performance degradation that have occurred in a database product. For example, the least significant bit represents an increase in CPU use rate, the second to last bit represents an increase in CPU waiting time, and the third to last bit represents an increase in I/O amount. One case of performance incompatibility may cause two or more types of performance degradation phenomena.

A response before change is a response time for an SQL statement measured in a database product before change. A response after change is a response time for an SQL statement measured in a database product after change. A throughput before change is the number of processed records per unit time measured in a database product before change. A throughput after change is the number of processed records per unit time measured in a database product after change. A CPU use rate before change is a CPU use rate measured in a database product before change. A CPU use rate after change is a CPU use rate measured in a database product after change.

A CPU waiting proportion before change is a proportion of the CPU waiting time measured in a database product before change. A proportion of CPU waiting time is a proportion of the waiting time during which the CPU waits for a response from a storage device in time taken to process an SQL statement. A CPU waiting proportion after change is a proportion of the CPU waiting time measured in a database product after change. An I/O amount before change is an amount of data transmission to and from a storage device measured in a database product before change. An I/O amount after change is an amount of data transmission to and from a storage device measured in a database product after change.

Hardware is the specifications of hardware used when the performance incompatibility is found. For example, specifications of hardware include the number of cores of a CPU, a clock frequency, the type of a storage device that stores records, and the like. A resolving method is an explanation of countermeasures for resolving the performance incompatibility. A resolving method may be a rewrite method of an SQL statement.

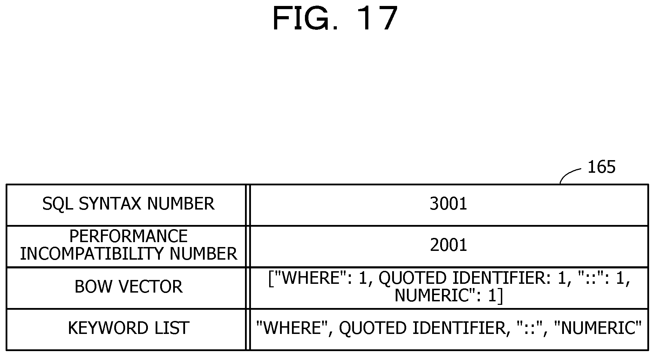

FIG. 17 is a diagram illustrating an example of SQL syntax information.

SQL syntax information 165 is stored in the incompatibility information storage unit 121. The SQL syntax information 165 represents the features of an SQL statement in which performance incompatibility occurs. The SQL syntax information 165 is associated with the performance incompatibility information 164. The SQL syntax information 165 includes an SQL syntax number, a performance incompatibility number, a bag of words (BOW) vector, and a keyword list.

An SQL syntax number is an identification number for identifying the SQL syntax information 165. A performance incompatibility number is an identification number of performance incompatibility information indicating performance incompatibility that occurs due to the SQL statement indicated by the SQL syntax information 165. A BOW vector is a vector in which keywords included in an SQL statement in which performance incompatibility occurs and the number of appearances thereof are enumerated. A keyword list is a list in which keywords included in an SQL statement in which performance incompatibility occurs are arranged in the appearance order in the SQL statement. Note that keywords that do not affect the occurrence of performance incompatibility are excluded from the BOW vector and the keyword list.

For example, the SQL syntax WHERE ... '...' : :NUMERIC is the cause of occurrence of performance incompatibility. In this case, a BOW vector indicating one WHERE, one quoted identifier, one and one NUMERIC is generated. Furthermore, a keyword list indicating the appearance order of WHERE, a quoted identifier, ::, and NUMERIC is generated.

When the source code 151 is the target of incompatibility absorption, the incompatibility detection unit 124 performs parsing of the source code 151 and generates the syntax tree 152. The incompatibility detection unit 124 tentatively executes the identification instructions and rewrite instructions of the syntax incompatibility information 156 for the syntax tree 152, and converts the syntax tree 152 into the syntax tree 158. Further, the incompatibility detection unit 124 collates the syntax tree 158 with the keyword list of the SQL syntax information 165, and determines whether the syntax tree 158 includes the SQL syntax of the SQL syntax information 165.

For example, the incompatibility detection unit 124 scans the word nodes that are the leaf nodes of the syntax tree 158 from left to right. During the scanning of the word nodes in the syntax tree 158, the incompatibility detection unit 124 determines whether the keywords included in the keyword list appear in that order. When all of the keywords included in the keyword list appear in that order, the incompatibility detection unit 124 determines that the syntax tree 158 includes the SQL syntax of the SQL syntax information 165. In such case, when the source code 151 is rewritten in accordance with the syntax incompatibility information 156, the incompatibility detection unit 124 determines that there is a risk of the performance incompatibility indicated by the performance incompatibility information 164.

On the other hand, when all of the keywords included in the keyword list do not appear in that order, the incompatibility detection unit 124 determines that the syntax tree 158 does not include the SQL syntax of the SQL syntax information 165. In such case, even when the source code 151 is rewritten in accordance with the syntax incompatibility information 156, the incompatibility detection unit 124 determines that the performance incompatibility indicated by the performance incompatibility information 164 does not occur. Here, the word nodes having the keywords WHERE, '1', ::, and NUMERIC included in the syntax tree 158 correspond to the keyword list of the SQL syntax information 165. Therefore, the incompatibility detection unit 124 determines that there is a risk of performance incompatibility.

In this case, the incompatibility detection unit 124 presents the performance incompatibility information 164 to a user together with the incompatible portion included in the source code 151 and the rewrite method of the syntax incompatibility information 156. This corresponds to recommendation of combination of the syntax incompatibility information 156 and the performance incompatibility information 164.

Next, a data structure of evaluation information will be described.

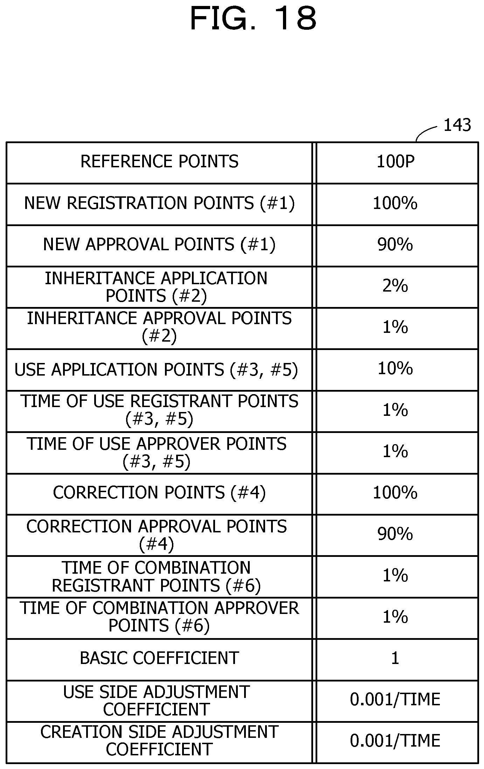

FIG. 18 is a diagram illustrating an example of a value master table.

The evaluation information storage unit 122 stores a value master table 143. The value master table 143 corresponds to the value master table 15 of the first embodiment. The value master table 143 defines a calculation method of points to be given to a user. The value master table 143 includes reference points. For example, the reference points are 100 points.

The value master table 143 includes new registration points and new approval points. New approval points are given to the registrant at the time of new registration of incompatibility information. New approval points are given to the approver of registered incompatibility information. New registration points and new approval points are defined as a ratio to the reference points. For example, the new registration points are 100% of the reference points, and the new approval points are 90% of the reference points.

Furthermore, the value master table 143 includes inheritance application points and inheritance approval points. Inheritance application points are given to the inheritance applicant at the time of inheritance of existing incompatibility information. Inheritance approval points are given to the approver of inheritance of incompatibility information. Inheritance application points and inheritance approval points are defined as a ratio to the reference points. For example, the inheritance application points are 2% of the reference points, and the inheritance approval points are 1% of the reference points.

Furthermore, the value master table 143 includes use application points, time of use registrant points, and time of use approver points. Use application points are given to the use applicant at the time of simple use or component use of incompatibility information. Time of use registrant points are given to the registrant of the used incompatibility information. Time of use approver points are given to the approver of the used incompatibility information. Use application points, time of use registrant points, and time of use approver points are defined as a ratio to the reference points. For example, the use application points are 10% of the reference points, and the time of use registrant points and the time of use approver points are 1% of the reference points.

However, use application points are multiplied by a use side coefficient to be described later. Time of use registrant points and time of use approver points are multiplied by a creation side coefficient to be described later. The use side coefficient and the creation side coefficient change depending on the cumulative number of times of use of incompatibility information. The use side coefficient is smaller as the cumulative number of times of use is larger. Therefore, incompatibility information with less use results has more use application points. The creation side coefficient is larger as the cumulative number of times of use is larger. Therefore, incompatibility information with more use results has more time of use registrant points and time of use approver points. As described above, points at the time of use of incompatibility information are asymmetric between the use side and the creation side.

Furthermore, the value master table 143 includes correction points and correction approval points. Correction points are given to the corrector at the time of correction of incompatibility information. Correction approval points are given to the approver of the corrected incompatibility information. Correction points and correction approval points are defined as a ratio to the reference points. For example, the correction points are 100% of the reference points, and the correction approval points are 90% of the reference points.

Furthermore, the value master table 143 includes time of combination registrant points and time of combination approver points. Time of combination registrant points are given to the registrant of each piece of incompatibility information when recommendation of combination of two pieces of incompatibility information is performed. Time of combination approver points are given to the approver of each piece of incompatibility information. Points are given for recommendation of combination without waiting for a use application of incompatibility information, since a preferable effect is exhibited in which potential incompatibility is found at an early stage and a failure is suppressed in advance, and rework of incompatibility absorption is reduced. Time of combination registrant points and time of combination approval points are defined as a ratio to the reference points. For example, the time of combination registrant points and the time of combination approval points are 1% of the reference points.

However, time of combination registrant points and time of combination approver points are multiplied by a creation side coefficient to be described later. The creation side coefficient is larger as the number of times of recommendation is larger. Therefore, incompatibility information with more combination results has more time of combination registrant points and time of combination approver points.

Furthermore, the value master table 143 includes a basic coefficient, a use side adjustment coefficient, and a creation side adjustment coefficient. A basic coefficient is an initial value of the use side coefficient and the creation side coefficient. A use side adjustment coefficient is a decrease amount of the use side coefficient per one time of use. A creation side adjustment coefficient is an increase amount of the creation side coefficient per one time of use. For example, the basic coefficient is 1, the use side adjustment coefficient is 0.001/time, and the creation side adjustment coefficient is 0.001/time.

A use side coefficient is calculated as basic coefficient - (cumulative number of times of use - 1) × use side adjustment coefficient. Therefore, the use side coefficient at the time of the first use agrees with the basic coefficient, and the use side coefficient decreases as the cumulative number of times of use increases. However, the lower limit of the use side coefficient is 0. A creation side adjustment coefficient is calculated as basic coefficient + (cumulative number of times of use - 1) × creation side adjustment coefficient. Therefore, the creation side coefficient at the time of the first use agrees with the basic coefficient, and the creation side coefficient increases as the cumulative number of times of use increases. However, an upper limit of the creation side coefficient may be set.

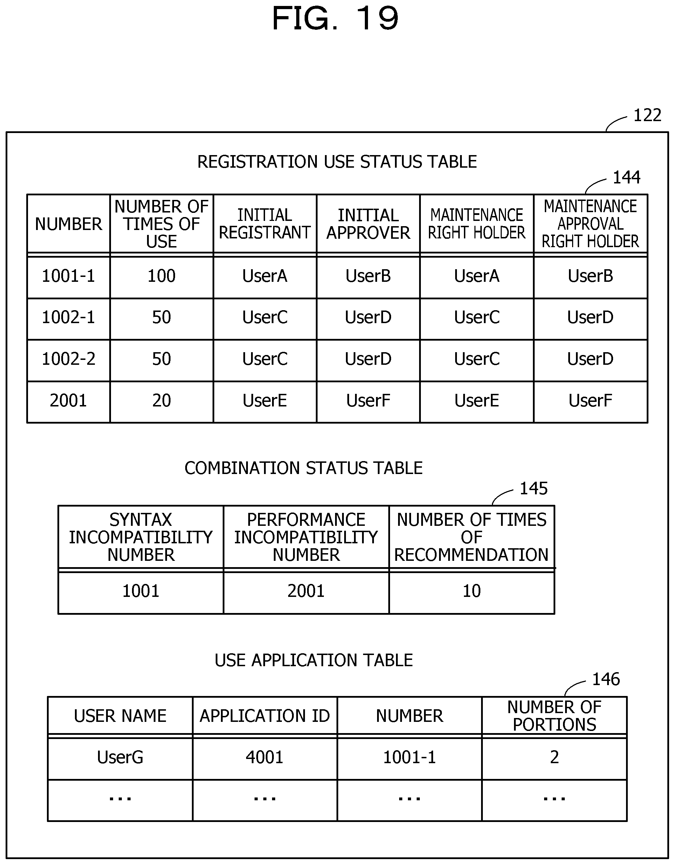

FIG. 19 is a diagram illustrating an example of tables used for incompatibility information management.

The evaluation information storage unit 122 stores a registration use status table 144. One record in the registration use status table 144 corresponds to one piece of incompatibility sub-information or one piece of performance incompatibility information. Each record in the registration use status table 144 includes a number, the number of times of use, an initial registrant, an initial approver, a maintenance right holder, and a maintenance approval right holder.

A number is an incompatibility sub-number for identifying incompatibility sub-information, or a performance incompatibility number for identifying performance incompatibility information. The number of times of use is the cumulative number of times of use of the information. Simple use of syntax incompatibility information means use of all pieces of incompatibility sub-information included in the syntax incompatibility information. An initial registrant is the user name of the registrant who has registered the information in the incompatibility information storage unit 121. An initial approver is the user name of the approver who has approved the information at the time of registration.

A maintenance right holder is the user name of the user who has inherited a status as a registrant. In a case where an initial registrant has left the task of incompatibility absorption, the initial registrant and the maintenance right holder do not agree. In such case, the maintenance right holder on behalf of the initial registrant has the right to be preferentially the inheritance applicant. A maintenance approval right holder is the user name of the user who has inherited a status as an approver. In a case where an initial approver has left the task of incompatibility absorption, the initial approver and the maintenance approval right holder do not agree. In such case, the maintenance approval right holder on behalf of the initial approver has the right to be preferentially the approver of inheritance.

Furthermore, the evaluation information storage unit 122 stores a combination status table 145. One record in the combination status table 145 corresponds to a pair of syntax incompatibility information and performance incompatibility information. Each record in the combination status table 145 includes a syntax incompatibility number, a performance incompatibility number, and the number of times of recommendation. A syntax incompatibility number identifies combined syntax incompatibility information. A performance incompatibility number identifies combined performance incompatibility information. The number of times of recommendation is the cumulative number of times of combination.

Furthermore, the evaluation information storage unit 122 stores a use application table 146. One record in the use application table 146 corresponds to use of one piece of incompatibility sub-information or performance incompatibility information in one incompatibility absorption project. Each record in the use application table 146 includes a user name, an application ID, a number, and the number of portions.

A user name is the name of a use applicant in simple use or a component use applicant in component use. An application ID is an identifier for identifying an incompatibility absorption project in which simple use or component use has been performed. A number is an incompatibility sub-number for identifying used incompatibility sub-information or a performance incompatibility number for identifying used performance incompatibility information. Note that simple use of syntax incompatibility information means use of all pieces of incompatibility sub-information included in the syntax incompatibility information. The number of portions is the number of incompatible portions detected in an incompatibility absorption project.

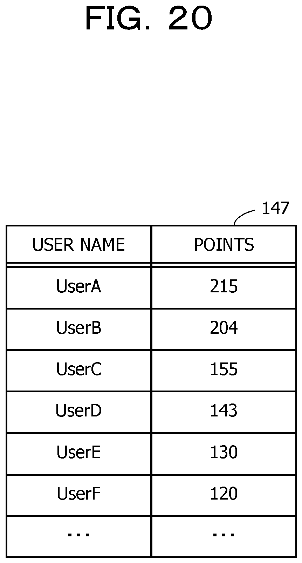

FIG. 20 is a diagram illustrating an example of a point totaling table.

The evaluation information storage unit 122 stores a point totaling table 147. The point management unit 126 may display the point totaling table 147 on the display device 111 or may transmit the point totaling table to another information processing device. One record in the point totaling table 147 corresponds to one user. Each record in the point totaling table 147 includes a user name and points. A user name is the name of a user. However, a user ID other than the name of a user may be used. Points are total points given to a user.

Next, a processing procedure of the information processing device 100 will be described.

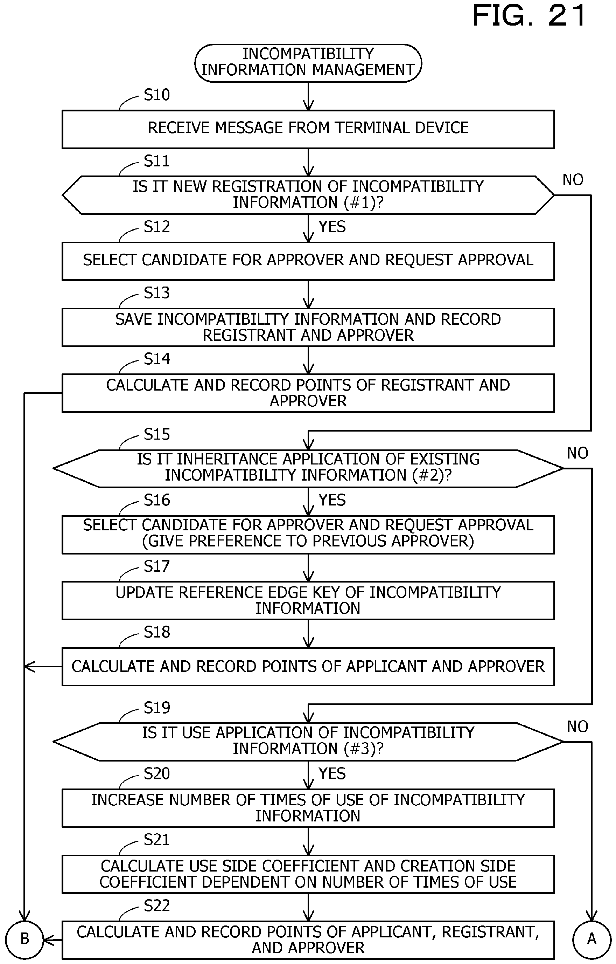

FIG. 21 is a flowchart illustrating a procedure example of incompatibility information management.

(S10) The information processing device 100 receives a message from a terminal device.

(S11) The information processing device 100 determines whether the received message is of the first type, that is, whether it is new registration of incompatibility information. When it is new registration of incompatibility information, the processing proceeds to step S12. In other cases, the processing proceeds to step S15.

(S12) The incompatibility information registration unit 123 selects a candidate for an approver and transmits an approval request message. The incompatibility information registration unit 123 receives an approval message from the approver.

(S13) The incompatibility information registration unit 123 saves the new incompatibility information in the incompatibility information storage unit 121. When the incompatibility information is syntax incompatibility information, the incompatibility information registration unit 123 adds a record to the syntax incompatibility master table 142. Furthermore, the incompatibility information registration unit 123 records the registrant and the approver in the registration use status table 144.

(S14) The point management unit 126 refers to the value master table 143 and calculates points to be given to the registrant and points to be given to the approver, and records the points in the point totaling table 147. For example, the point management unit 126 gives 100 points to the registrant and gives 90 points to the approver. Then, the incompatibility information management ends.

(S15) The information processing device 100 determines whether the received message is of the second type, that is, whether it is an inheritance application of existing incompatibility information. When it is an inheritance application, the processing proceeds to step S16. In other cases, the processing proceeds to step S19.

(S16) The incompatibility information registration unit 123 selects a candidate for an approver and transmits an approval request message. As the candidate for an approver, the initial approver or the maintenance approval right holder in the registration use status table 144 is prioritized. The incompatibility information registration unit 123 receives an approval message from the approver.

(S17) The incompatibility information registration unit 123 updates the reference edge key included in the syntax incompatibility master table 142, and associates the syntax incompatibility information with a new edge.

(S18) The point management unit 126 refers to the value master table 143 and calculates points to be given to the inheritance applicant and points to be given to the current approver, and records the points in the point totaling table 147. For example, the point management unit 126 gives two points to the inheritance applicant and gives one point to the approver. Then, the incompatibility information management ends.

(S19) The information processing device 100 determines whether the received message is of the third type, that is, whether it is a use application of incompatibility information. When it is a use application, the processing proceeds to step S20. In other cases, the processing proceeds to step S23.

(S20) The point management unit 126 records the use application in the use application table 146, and increases the cumulative number of times of use of the used incompatibility information by the number of portions included in the use application.

(S21) The point management unit 126 refers to the value master table 143 and calculates a use side coefficient and a creation side coefficient that are dependent on the cumulative number of times of use. As the cumulative number of times of use is larger, the use side coefficient is calculated to be smaller and the creation side coefficient is calculated to be larger.

(S22) The point management unit 126 calculates points to be given to the use applicant based on the value master table 143 and the use side coefficient of step S21, and records the points in the point totaling table 147. For example, the point management unit 126 gives varying points of 0 point or more and 10 points or less to the use applicant. Furthermore, the point management unit 126 calculates points to be given to the registrant of the used incompatibility information and points to be given to the approver based on the value master table 143 and the creation side coefficient of step S21, and records the points in the point totaling table 147. For example, the point management unit 126 gives varying points of one point or more to each of the registrant and the approver. Then, the incompatibility information management ends.

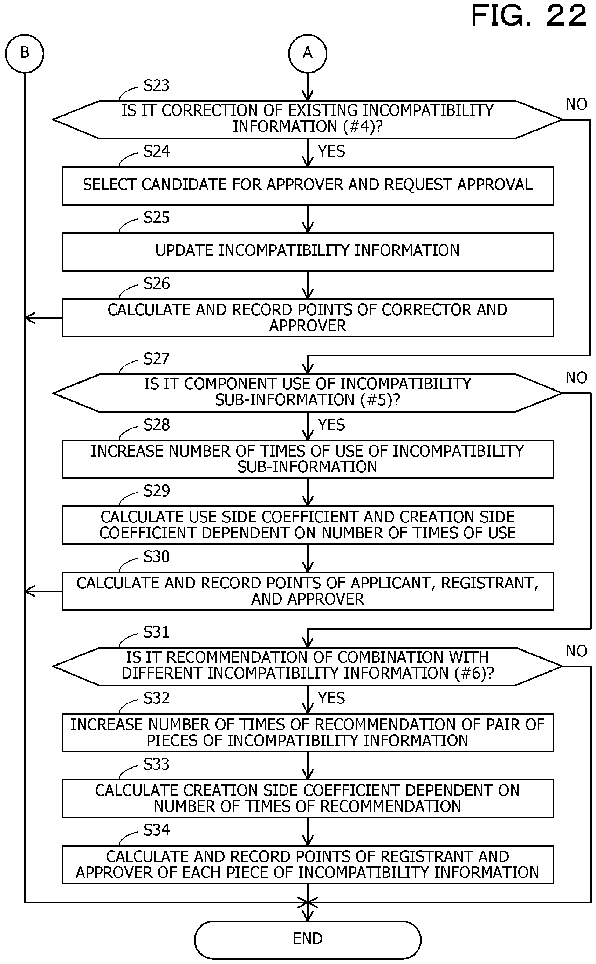

FIG. 22 is a flowchart illustrating the procedure example of incompatibility information management (continued).

(S23) The information processing device 100 determines whether the received message is of the fourth type, that is, whether it is correction of existing incompatibility information. When it is correction, the processing proceeds to step S24. In other cases, the processing proceeds to step S27.

(S24) The incompatibility information registration unit 123 selects a candidate for an approver and transmits an approval request message. The incompatibility information registration unit 123 receives an approval message from the approver.

(S25) The incompatibility information registration unit 123 updates the existing incompatibility information stored in the incompatibility information storage unit 121.

(S26) The point management unit 126 refers to the value master table 143 and calculates points to be given to the corrector and points to be given to the current approver, and records the points in the point totaling table 147. For example, the point management unit 126 gives 100 points to the corrector and gives 90 points to the approver. Then, the incompatibility information management ends.

(S27) The information processing device 100 determines whether the received message is of the fifth type, that is, whether it is component use of incompatibility sub-information. When it is component use, the processing proceeds to step S28. In other cases, the processing proceeds to step S31.

(S28) The point management unit 126 records the component use in the use application table 146, and increases the cumulative number of times of use of the used incompatibility sub-information by the number of portions included in the use application.

(S29) The point management unit 126 refers to the value master table 143 and calculates a use side coefficient and a creation side coefficient that are dependent on the cumulative number of times of use. As the cumulative number of times of use is larger, the use side coefficient is calculated to be smaller and the creation side coefficient is calculated to be larger.

(S30) The point management unit 126 calculates points to be given to the component use applicant based on the value master table 143 and the use side coefficient of step S29, and records the points in the point totaling table 147. For example, the point management unit 126 gives varying points of 0 point or more and 10 points or less to the component use applicant. Furthermore, the point management unit 126 calculates points to be given to the registrant of the used incompatibility sub-information and points to be given to the approver based on the value master table 143 and the creation side coefficient of step S29, and records the points in the point totaling table 147. For example, the point management unit 126 gives varying points of one point or more to the registrant and the approver. Then, the incompatibility information management ends.

(S31) The information processing device 100 determines that the received message is of the sixth type, that is, it is assessment of the incompatibility absorption. The incompatibility detection unit 124 executes assessment for the source code received from the terminal device, and transmits an assessment result to the terminal device. In the assessment, the information processing device 100 determines whether recommendation of combination of different pieces of incompatibility information has been performed. When recommendation of combination has been performed, the processing proceeds to step S32. In other cases, the incompatibility information management ends.

(S32) The point management unit 126 increases the number of times of recommendation corresponding to the combined pair of pieces of incompatibility information by one in the combination status table 145.

(S33) The point management unit 126 refers to the value master table 143 and calculates a creation side coefficient dependent on the number of times of recommendation in step S32. As the number of times of recommendation is larger, the creation side coefficient is calculated to be larger.

(S34) The point management unit 126 calculates points to be given to the registrant of each piece of combined incompatibility information and points to be given to the approvers based on the value master table 143 and the creation side coefficient of step S33, and records the points in the point totaling table 147. For example, the point management unit 126 gives varying points of one point or more to the registrant and the approver.

As described above, the information processing system of the second embodiment accumulates, in a shared database, incompatibility information indicating the know-how of incompatibility absorption of database products. The information processing system automatically detects an incompatible portion from the source code by using the accumulated incompatibility information, and presents a resolving method of the incompatibility to a user. Furthermore, the information processing system rewrites the source code so as to resolve the incompatibility. Therefore, incompatibility absorption is streamlined.

Furthermore, the information processing system monitors registration and use of incompatibility information, and gives points as an incentive to users who have contributed to an improvement in the value of the shared database. Accordingly, registration and use of incompatibility information are recommended, and active use of the shared database is promoted. As a result, knowledge of incompatibility absorption is shared among users, and incompatibility absorption is streamlined.

Furthermore, the information processing system gives points to the registrant and the approver at the time of new registration of incompatibility information. Accordingly, the number of pieces of incompatibility information accumulated in the shared database is increased, and the quality of the registered incompatibility information is improved. Furthermore, the information processing system gives points to the inheritance applicant and the approver at the time of inheritance of existing incompatibility information. Accordingly, the number of database products to which the same incompatibility information may be applied increases. At this time, the registrant and the approver of incompatibility information may preferentially become the inheritance applicant and the approver of the incompatibility information. Therefore, confirmation of inheritance is streamlined, and the fairness between users is improved.

Furthermore, the information processing system gives points to the use applicant, the registrant, and the approver at the time of use of incompatibility information. Accordingly, use of the incompatibility information accumulated in the shared database is increased, and an incentive for registration and approval of incompatibility information is also given. Furthermore, a use applicant acquires more points as incompatibility information with less use results is used. Accordingly, a wide range of use of incompatibility information is increased. On the other hand, a registrant and an approver acquire more points as there are more use results of the registered incompatibility information. Accordingly, the incentive for registration and approval of incompatibility information is strengthened, and the quality of incompatibility information is improved.

Furthermore, the information processing system gives points to the corrector and the approver at the time of correction of incompatibility information. Accordingly, leaving an error in incompatibility information is suppressed, and the quality of the incompatibility information accumulated in the shared database is improved. Furthermore, the information processing system gives points to the use applicant, the registrant, and the approver at the time of component use of incompatibility sub-information that is a part of incompatibility information. Accordingly, reuse of incompatibility sub-information is increased. Furthermore, the information processing system gives points to the registrant and approver of each piece of incompatibility information when related syntax incompatibility information and performance incompatibility information are paired and presented to a user. Accordingly, potential incompatibility is found at an early stage and a failure is suppressed in advance, and rework of incompatibility absorption is reduced.

The above description merely illustrates the principle of the present disclosure. Further, a large number of modifications and changes are possible for those skilled in the art. The present disclosure is not limited to the accurate configuration and application examples illustrated and described above. All corresponding modification examples and equivalents are regarded as being within the scope of the present disclosure by the appended claims and their equivalents.

### CITATION LIST

### PATENT LITERATURE

PTL 1: International Publication Pamphlet No. WO 2003/069466
PTL 2: Japanese Laid-open Patent Publication No. 2006-99418
PTL 3: International Publication Pamphlet No. WO 2015/100496

### REFERENCE SIGNS LIST

- 10: information processing device
- 11: storage unit
- 12: processing unit
- 13: incompatibility information
- 14: registrant information
- 15: value master table
- 16, 17: use information
- 18a, 18b, 19: evaluation value

## Claims

1. An information processing program that causes a computer to execute a process comprising:
acquiring use information that is use information for a database that includes incompatibility information that indicates a rewrite method in which source code dependent on first software is made compatible with second software and registrant information that indicates a registrant of the incompatibility information, and indicates a user of the incompatibility information and a use result of the incompatibility information;
identifying a type of the use result indicated by the use information; and
calculating an evaluation value to be given to at least one of the user indicated by the use information and the registrant indicated by the registrant information according to the identified type based on evaluation reference information that indicates a correspondence relationship between a plurality of types of use results and a plurality of evaluation values.

2. The information processing program according to claim 1, wherein
the calculating of an evaluation value includes a process of calculating a first evaluation value to be given to the user and a second evaluation value to be given to the registrant in a case where the identified type is use success of the incompatibility information for a pair of the first software and the second software.

3. The information processing program according to claim 2, wherein
the database includes number of times of use information that indicates a cumulative number of times of use of the incompatibility information, and
the first evaluation value and the second evaluation value are calculated according to the number of times of use information.

4. The information processing program according to claim 3, wherein
the first evaluation value is calculated to be larger as the cumulative number of times of use is smaller, and the second evaluation value is calculated to be larger as the cumulative number of times of use is larger.

5. The information processing program according to claim 1, wherein
the calculating of an evaluation value includes a process of calculating a third evaluation value to be given to the user in a case where the identified type is application of the incompatibility information to another pair of pieces of software different from a pair of the first software and the second software.

6. The information processing program according to claim 1, wherein
the incompatibility information includes two or more pieces of incompatibility sub-information that indicate a rewrite method in which two or more discontinuous character strings in the source code are rewritten, and
the calculating of an evaluation value includes a process of calculating a fourth evaluation value to be given to the user and a fifth evaluation value to be given to the registrant in a case where the identified type is partial use of part of incompatibility sub-information included in the incompatibility information.

7. The information processing program according to claim 1, wherein
the database includes another piece of incompatibility information that indicates a syntax that causes a failure of the second software and another piece of registrant information that indicates another registrant who has registered the another piece of incompatibility information, and
the calculating of an evaluation value includes a process of calculating a sixth evaluation value to be given to the registrant and a seventh evaluation value to be given to the another registrant in a case where the identified type is conflict between the rewrite method indicated by the incompatibility information and the syntax indicated by the another piece of incompatibility information.

8. The information processing program according to claim 1, wherein
the calculating of an evaluation value includes a process of calculating an eighth evaluation value to be given to the user in a case where the identified type is correction of the incompatibility information.

9. An information processing method implemented by a computer, the information processing method comprising:
acquiring use information that is use information for a database that includes incompatibility information that indicates a rewrite method in which source code dependent on first software is made compatible with second software and registrant information that indicates a registrant of the incompatibility information, and indicates a user of the incompatibility information and a use result of the incompatibility information;
identifying a type of the use result indicated by the use information; and
calculating an evaluation value to be given to at least one of the user indicated by the use information and the registrant indicated by the registrant information according to the identified type based on evaluation reference information that indicates a correspondence relationship between a plurality of types of use results and a plurality of evaluation values.

10. An information processing apparatus comprising:
a storage unit configured to store incompatibility information and registrant information, the incompatibility information being information that indicates a rewrite method in which source code dependent on first software is made compatible with second software, the registrant information being information that indicates a registrant of the incompatibility information; and
a processing unit configured to perform processing including:
acquiring use information, the user information indicating a user of the incompatibility information and a use result of the incompatibility information;
identifying a type of the use result indicated by the use information; and
calculating an evaluation value to be given to at least one of the user indicated by the use information and the registrant indicated by the registrant information according to the identified type based on evaluation reference information that indicates a correspondence relationship between a plurality of types of use results and a plurality of evaluation values.
